# EUROPEAN PATENT APPLICATION

(11) **EP 4 694 414 A1**
(43) Date of publication of application: **11.02.2026**
(21) Application number: 23929474.7
(22) Date of filing: 31.03.2023
(51) Int. Cl.: H04W 64/00

(54) **INFORMATION PROCESSING METHOD, APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LU, Wei, Beijing 100085 (CN)
(74) Representative: Stöckeler, Ferdinand
(86) International application number: PCT/CN2023/085685
(87) International publication number: WO 2024/197891

(57) **Abstract**

Embodiments of the present disclosure provide an information processing method, an apparatus, a communication device, and a storage medium. The information processing method executed by a first UE may comprise: sending a first request message to a first network device, wherein the first request message comprises information of a client UE, and the information of the client UE indicates at least a UE requesting to acquire a side link (SL) positioning result; receiving a first response message returned by the first network device; and determining, according to the first response message, whether to provide an SL positioning result between the first UE and a second UE to the client UE.

## Description

### FIELD

The present disclosure relates to, but is not limited to, the field of wireless communication technology, and more particularly to an information processing method and apparatus, a communication device and a storage medium.

### BACKGROUND

Client user equipment (client UE) can request a network-assisted sidelink (SL) positioning service to obtain an SL positioning result between two other UEs (i.e., to-be-measured UEs). For requesting the network-assisted SL positioning service, the client UE needs to be authorized by the network device to avoid privacy violation of the to-be-measured UEs and/or charging invalidation.

The authorization of the client UE by the network device includes at least two levels of authorization. A first level of authorization is used to determine whether the client UE is allowed to access the SL positioning service. That is, the client UE should be authorized to request the SL positioning service. The second level of authorization is for preserving the privacy of the to-be-measured UE. It can be understood that even if the positioning client UE is authorized to request the network-assisted SL positioning service, it does not mean that the SL positioning result of any to-be-measured UE can always be exposed to the client UE. For example, it is possible that the client UE is allowed to request SL positioning result between UE1 and UE2, but may not be allowed to request SL positioning result between UE3 and UE4. If privacy-related authorization information of the to-be-measured UEs is not further checked, there is still the risk that SL positioning result between specific to-be-measured UEs could be exposed to unauthorized client UE.

### SUMMARY

Embodiments of the present disclosure provide an information processing method and apparatus, a communication device, and a storage medium.

A first aspect of embodiments of the present disclosure provides an information processing method, which is performed by a first UE, and includes: sending a first request message to a first network device, where the first request message is used to request the first network device to determine whether a client UE is allowed to obtain a sidelink (SL) positioning result; and the first request message at least includes: information of the client UE; receiving a first response message returned by the first network device; and determining whether to provide an SL positioning result between the first UE and a second UE to the client UE according to the first response message.

A second aspect of embodiments of the present disclosure provides an information processing method, which is performed by a first network device, and includes: receiving a first request message from a first UE, where the first request message is used to request the first network device to determine whether a client UE is allowed to obtain a sidelink (SL) positioning result; and the first request message at least includes: information of the client UE; sending a fourth request message to a second network device according to the first request message; where the fourth request message is used to request the second network device to determine whether the client UE is allowed to obtain the SL positioning result; and the fourth request message at least includes: the information of the client UE; receiving a fourth response message from the second network device; where the fourth response message at least indicates whether the client UE is allowed to obtain the SL positioning result; and sending a first response message to the first UE according to the fourth response message.

A third aspect of embodiments of the present disclosure provides an information processing method, which is performed by a second network device, and includes: receiving a fourth request message sent by a first network device; where the fourth request message is used to request the second network device to determine whether a client user equipment (UE) is allowed to obtain a sidelink (SL) positioning result; and the fourth request message at least includes: information of the client UE; determining whether the client UE is allowed to obtain the SL positioning result according to the fourth request message; and sending a fourth response message to the first network device according to whether the client UE is allowed to obtain the SL positioning result.

A fourth aspect of embodiments of the present disclosure provides an information processing method, which is performed by a third network device, and includes: receiving a fifth request message sent by a second network device, where the fifth request message is used to request the third network device to determine whether a client UE is allowed to obtain an SL positioning result; and the fifth request message at least includes: information of the client UE; and sending a fifth response message to the second network device according to the fifth request message, where the fifth response message is used for the second network device to determine whether the client UE is allowed to obtain the SL positioning result.

A fifth aspect of embodiments of the present disclosure provides an information processing method, which includes: sending, by a first user equipment (UE), a first request message to a first network device, where the first request message is used to request the first network device to determine whether a client UE is allowed to obtain a sidelink (SL) positioning result; the first request message at least includes: information of the client UE; receiving, by the first network device, the first request message from the first UE, and sending, by the first network device, a fourth request message to a second network device according to the first request message; where the fourth request message is used to request the second network device to determine whether the client UE is allowed to obtain the SL positioning result; and the fourth request message at least includes: the information of the client UE; receiving, by the second network device, the fourth request message; determining, by the second network device, whether the client UE is allowed to obtain the SL positioning result according to the fourth request message; and sending, by the second network device, a fourth response message to the first network device according to whether the client UE is allowed to obtain the SL positioning result; receiving, by the first network device, the fourth response message from the second network device; where the fourth response message at least indicates whether the client UE is allowed to obtain the SL positioning result; and sending, by first network device, a first response message to the first UE according to the fourth response message; and receiving, by the first UE, the first response message returned by the first network device; and determining, by first UE, whether to provide an SL positioning result between the first UE and a second UE to the client UE according to the first response message.

A sixth aspect of embodiments of the present disclosure provides an information processing apparatus, which includes: a first sending module, configured to send a first request message to a first network device, where the first request message is used to request the first network device to determine whether a client user equipment (UE) is allowed to obtain a sidelink (SL) positioning result; and the first request message at least includes: information of the client UE; a first receiving module, configured to receive a first response message returned by the first network device; and a first determining module, configured to determine whether to provide an SL positioning result between the first UE and a second UE to the client UE according to the first response message.

A seventh aspect of embodiments of the present disclosure provides an information processing apparatus, which includes: a second receiving module, configured to receive a first request message from a first user equipment (UE), where the first request message is used to request a first network device to determine whether a client user equipment (UE) is allowed to obtain a sidelink (SL) positioning result; and the first request message at least includes: information of the client UE; and a second sending module, configured to send a fourth request message to a second network device according to the first request message; where the fourth request message is used to request the second network device to determine whether the client UE is allowed to obtain the SL positioning result; and the fourth request message at least includes: the information of the client UE. The second receiving module is configured to receive a fourth response message from the second network device; where the fourth response message at least indicates whether the client UE is allowed to obtain the SL positioning result; and the second sending module is configured to send a first response message to the first UE according to the fourth response message.

An eighth aspect of embodiments of the present disclosure provides an information processing apparatus, which includes: a third receiving module, configured to receive a fourth request message sent by a first network device; where the fourth request message is used to request a second network device to determine whether a client UE is allowed to obtain an SL positioning result; and the fourth request message at least includes: information of the client UE; a second determining module, configured to determine whether the client UE is allowed to obtain the SL positioning result according to the fourth request message; and a third sending module, configured to send a fourth response message to the first network device according to whether the client UE is allowed to obtain the SL positioning result.

A ninth aspect of embodiments of the present disclosure provides an information processing apparatus, which includes: a fourth receiving module, configured to receive a fifth request message sent by a second network device, where the fifth request message is used to request a third network device to determine whether a client user equipment (UE) is allowed to obtain a sidelink (SL) positioning result; and the fifth request message at least includes: information of the client UE; and a fourth sending module, configured to send a fifth response message to the second network device according to the fifth request message, where the fifth response message is used for the second network device to determine whether the client UE is allowed to obtain the SL positioning result.

A tenth aspect of embodiments of the present disclosure provides a wireless communication system, which includes: a first user equipment (UE), a first network device, and a second network device. The first UE is configured to send a first request message to the first network device, the first request message is used to request the first network device to determine whether a client UE is allowed to obtain a sidelink (SL) positioning result; and the first request message at least includes: information of the client UE. The first network device is configured to receive the first request message from the first UE, and send a fourth request message to the second network device according to the first request message; the fourth request message is used to request the second network device to determine whether the client UE is allowed to obtain the SL positioning result; and the fourth request message at least includes: the information of the client UE. The second network device is configured to: receive the fourth request message; determine whether the client UE is allowed to obtain the SL positioning result according to the fourth request message; and send a fourth response message to the first network device according to whether the client UE is allowed to obtain the SL positioning result. The first network device is further configured to: receive the fourth response message from the second network device; where the fourth response message at least indicates whether the client UE is allowed to obtain the SL positioning result; and send a first response message to the first UE according to the fourth response message. The first UE is further configured to: receive the first response message returned by the first network device; and determine whether to provide an SL positioning result between the first UE and a second UE to the client UE according to the first response message.

An eleventh aspect of embodiments of the present disclosure provides a communication device, which includes a processor, a transceiver, a memory, and executable programs stored in the memory and runnable by the processor, and the processor is configured to perform the information processing method according to any technical solution as described in the first to fifth aspects above when running the executable programs.

A twelfth aspect of embodiments of the present disclosure provides a computer storage medium having stored therein executable programs that, when executed by a processor, cause the information processing method according to any technical solution as described in the first to fifth aspects above to be implemented.

According to the technical solution provided in embodiments of the present disclosure, the first UE is able to determine whether the client UE is allowed to obtain the SL positioning result and/or whether the client UE is allowed to obtain the SL positioning result of the to-be-measured UE through the interaction with the network device. In this way, the problem of leakage of the SL positioning result of the to-be-measured UE in the case where the client UE is not allowed to obtain the SL positioning result and/or the client UE is not allowed to obtain the SL positioning result of the to-be-measured UE is reduced, thereby improving the security of the SL positioning result of the to-be-measured UE.

Regarding the technical solutions provided in embodiments of the present disclosure, it is to be understood that both the foregoing general description and the following detailed description are illustrative and explanatory and are not restrictive of embodiments of the disclosure.

### BRIEF DESCRIPTION OF THE DRAWINGS

The accompanying drawings here, which are incorporated in and constitute a part of this specification, illustrate embodiments consistent with the present disclosure and, together with the description, serve to explain the principles of embodiments of the present disclosure.
FIG. 1 shows a schematic structural diagram of a wireless communication system according to an example embodiment;
FIG. 2A shows a schematic flow chart of an information processing method according to an example embodiment;
FIG. 2B shows a schematic flow chart of an information processing method according to an example embodiment;
FIG. 2C shows a schematic flow chart of an information processing method according to an example embodiment;
FIG. 2D shows a schematic flow chart of an information processing method according to an example embodiment;
FIG. 2E shows a schematic flow chart of an information processing method according to an example embodiment;
FIG. 3 shows a schematic flow chart of an information processing method according to an example embodiment;
FIG. 4A shows a schematic flow chart of an information processing method according to an example embodiment;
FIG. 4B shows a schematic flow chart of an information processing method according to an example embodiment;
FIG. 4C shows a schematic flow chart of an information processing method according to an example embodiment;
FIG. 5A shows a schematic flow chart of an information processing method according to an example embodiment;
FIG. 5B shows a schematic flow chart of an information processing method according to an example embodiment;
FIG. 5C shows a schematic flow chart of an information processing method according to an example embodiment;
FIG. 6A shows a schematic flow chart of an information processing method according to an example embodiment;
FIG. 6B shows a schematic flow chart of an information processing method according to an example embodiment;
FIG. 7A shows a schematic flow chart of an information processing method according to an example embodiment;
FIG. 7B shows a schematic flow chart of an information processing method according to an example embodiment;
FIG. 7C shows a schematic flow chart of an information processing method according to an example embodiment;
FIG. 8A shows a schematic block diagram of an information processing apparatus according to an example embodiment;
FIG. 8B shows a schematic block diagram of an information processing apparatus according to an example embodiment;
FIG. 8C shows a schematic block diagram of an information processing apparatus according to an example embodiment;
FIG. 8D shows a schematic block diagram of an information processing apparatus according to an example embodiment;
FIG. 9A shows a schematic structural diagram of a UE according to an example embodiment; and
FIG. 9B shows a schematic structural diagram of a communication device according to an example embodiment.

### DETAILED DESCRIPTION

Illustrative embodiments will be described in detail herein, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with embodiments of the present disclosure. Instead, they are merely examples of apparatuses and methods consistent with some aspects of embodiments of the present disclosure.

Terms used in embodiments of the present disclosure are for the purpose of describing specific embodiments, but are not intended to limit embodiments of the present disclosure. As used in the present disclosure, "a/an", "said" and "the" in singular forms are intended to include plural forms, unless clearly indicated in the context otherwise. It should also be understood that the term "and/or" used herein represents and contains any one or any possible combinations of one or more associated items listed.

It should be understood that, although terms such as "first," "second" and "third" may be used in embodiments of the present disclosure for describing various information, these information should not be limited by these terms. These terms are used for distinguishing information of the same type from each other. For example, first information may also be referred to as second information, and similarly, the second information may also be referred to as the first information, without departing from the scope of embodiments of the present disclosure. Depending on the context, the term "if" as used herein may be construed to mean "when" or "upon" or "in response to determining".

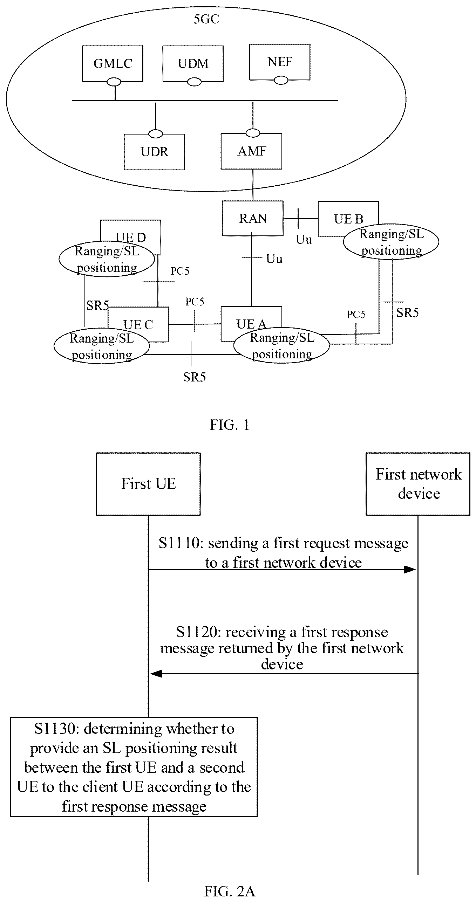

Referring to FIG. 1, FIG. 1 shows an architecture of a communication system for sidelink (SL) positioning and ranging according to embodiments of the present disclosure. The communication system includes at least two UEs (e.g., UE A, UE B, UE C, and UE D), a radio access network (RAN) device, and a core network device (e.g., a 5G core network). In an example, there is a Uu interface between the RAN and the UE A within network coverage.

In an example, the core network device may include: access management function (AMF), user data management (UDM), gateway mobile location center (GMLC) and network exposure function (NEF). Of course, FIG. 1 is an example of the core network device, and specific implementations are not limited to this example.

AMF may be used to perform the following functions:
in a case where it is determined according to a UE capability in a registration request that a UE supports a ranging/SL positioning service, selecting a policy control function (PCF) supporting the ranging/SL positioning service for the UE, storing ranging/SL positioning capability information of the UE, and informing the ranging/SL positioning capability to the Location Management Function (LMF).

The PCF is a type of core network device, which may be specifically used to configure a policy for a UE, for example configure a quality of service (QoS) parameter of the ranging/SL positioning service.

UDM may have stored therein subscription data, such as subscription data of ranging/SL positioning of a UE, etc.

NEF may serve as an interface for a device outside the core network to access a device within the core network.

For example, an application function (AF) outside the core network may access UDM or GMLC through NEF.

Interfaces between UEs in FIG. 1 include a PC5 interface and an SR5 interface.

The PC5 interface is an interface for SL communication between UEs, supporting the ranging/SL positioning service. The SR5 interface is built on the basis of the PC5 interface and is used for the ranging/SL positioning service between UEs.

In some embodiments, the ranging/SL positioning service may also be referred to as an SL positioning/ranging service.

In some embodiments, UE A and UE B involved in the SL positioning and ranging service both have subscriptions from the same PLMN. In some other embodiments, the communication system also supports the situation where UE A, UE B, or both are not registered to the network or are out of coverage. UE C and UE D may be out of coverage or have partial network coverage.

As shown in FIG. 2A, embodiments of the present disclosure provide an information processing method, which is performed by a first UE and includes the following operations.

S1110: a first request message is sent to a first network device, and the first request message is used to determine whether a client UE is allowed to obtain a sidelink (SL) positioning result. The first request message at least includes: information of the client UE.

S1120: a first response message returned by the first network device is received.

S1130: it is determined according to the first response message whether to provide an SL positioning result between the first UE and a second UE to the client UE.

Here, the first UE and the second UE are both to-be-measured UEs. The SL positioning result is a positioning result obtained by a ranging/SL positioning operation between the first UE and the second UE. The SL positioning result may include: a distance and/or a relative angle between the first UE and the second UE. The first UE is able to communicate with the client UE and the second UE via an SL channel or a PC5 link, respectively. The client UE may only establish a PC5 link with the first UE. The client UE may establish or may not establish a PC5 link with the second UE.

For example, both the first UE and the second UE may be various terminal devices, which may include but are not limited to mobile devices and/or fixed devices. Typical mobile devices include but are not limited to: mobile phones, tablet computers, wearable devices, vehicle-mounted devices, smart office devices and/or smart home devices. For example, the first UE may be the UE shown in FIG. 1.

In embodiments of the present disclosure, the first UE, as one of to-be-measured UEs requested by the client UE, may be close to the client UE and is able to establish a PC5 link with the client UE. The PC5 link may also be referred to as an SL connection. The client UE may be an SL positioning client UE.

For example, the first UE monitors the SL channel, and if it receives a request message sent by the client UE, it sends a response message to the client UE. If the client UE wants to obtain the SL positioning result between the first UE and the second UE, the client UE will send a broadcast message on the SL channel, and the broadcast message includes information of the first UE and the second UE. If the first UE monitors a broadcast message including its own information, it may consider itself as the UE that the client UE sending the broadcast message intends to find.

For example, the information of the first UE and the second UE included in the broadcast message may include: identification information of the first UE and the second UE. The identification information may be an application layer identifier and a layer 2 (L2) identifier.

For example, the broadcast message may include but is not limited to a direct communication request (DCR). In this case, the first UE may request the first network device to authorize the client UE. For example, the first UE sends the first request message to the first network device.

In some embodiments, the first request message may at least include the information of the client UE. In this case, the first request message is used to request the first network device to determine whether the client UE is allowed to obtain the SL positioning result.

In some other embodiments, the first request message may at least include: the information of the client UE, the information of the first UE, and the information of the second UE. In this case, the first request message is used to request the first network device to determine whether the client UE is allowed to obtain the SL positioning result between the first UE and the second UE.

Information of a UE may at least include: a user information identifier (User Info Identifier) and/or a subscription permanent identifier (SUPI) of the UE. The user information identifier is used to uniquely identify the client UE and is identification information that can be recognized by the network device.

For example, after receiving the DCR from the client UE, the first UE sends the first request message to the first network device. The first network device may be a core network device. The core network device includes but is not limited to an access management function (AMF). In this case, the first request message may be a non-access stratum (NAS) message.

In some embodiments, the first request message may be an authorization request message. The authorization request message may be used for the first network device to determine whether the client UE is allowed to obtain the SL positioning result between the first UE and the second UE. That is, the authorization request message is used to determine two levels of authorization to the client UE, i.e., on the one hand to determine whether the client UE is allowed to request an SL positioning service, and on the other hand to determine based on a privacy configuration of the to-be-measured UE whether the client UE is authorized to obtain the SL positioning result between the first UE and the second UE. That is, the authorization request message is used to request the first network device to determine whether the client UE is allowed to request the SL positioning service, and whether the SL positioning result between the first UE and the second UE is allowed to be exposed to the client UE in the case where the client UE is allowed to request the SL positioning service.

The SL positioning result is a positioning result between the to-be-measured first and second UEs obtained based on the SL positioning. The SL positioning result may include: a relative distance and/or a relative angle between the first UE and the second UE. The first UE and the second UE may be collectively referred to as the to-be-measured UE.

In some embodiments, the method further includes: providing the SL positioning result of the to-be-measured UE to the client UE via the PC5 link in a case where it is determined that the SL positioning result of the to-be-measured UE is allowed to be provided to the client UE; or not providing the positioning result of the to-be-measured UE to the client UE in a case where it is determined that the SL positioning result of the to-be-measured UE is not allowed to be provided to the client UE.

In some embodiments, the to-be-measured UE may include the first UE and/or the second UE.

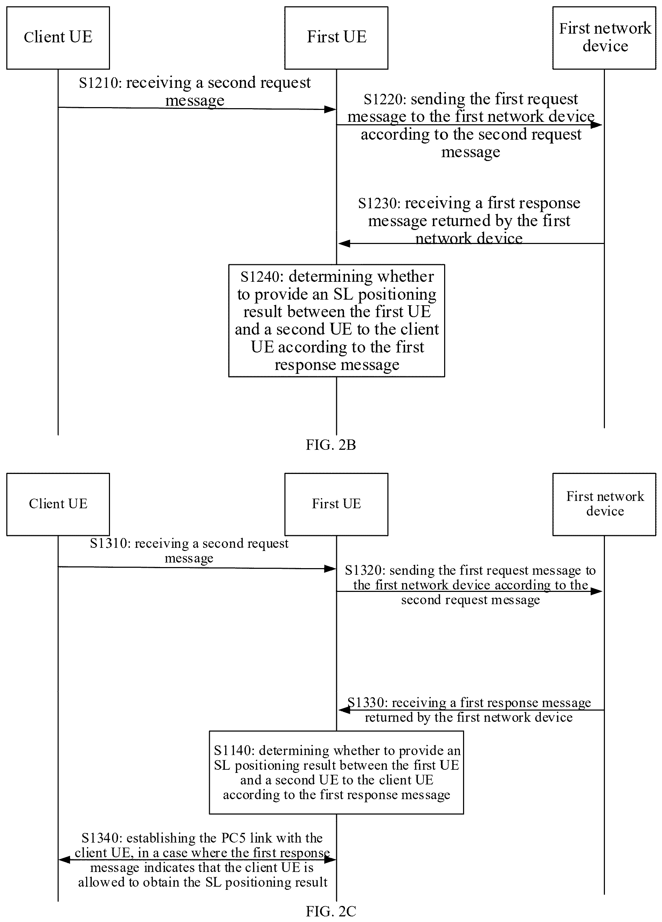

As shown in FIG. 2B, embodiments of the present disclosure provide an information processing method, which is performed by a first UE and includes the following operations.

S1210: a second request message is received; and the second request message is used by the client UE to request to establish a PC5 link. The PC5 link is at least capable of providing the SL positioning result to the client UE. In some embodiments, the second request message may also include: information of the first UE and the second UE.

S1220: a first request message is sent to the first network device according to the second request message.

S1230: a first response message returned by the first network device is received.

S1240: it is determined whether to provide an SL positioning result between the first UE and the second UE to the client UE according to the first response message.

The second request message may be used by any client UE to request to establish a PC5 link. For example, the second request message is used to request establishment of a secure PC5 link. The secure PC5 link may be used to protect information transmission using an integrity key and/or a confidentiality key. For example, the second request message may be a direct communication request (DCR) sent by the client UE. If the second request message is a DCR, after the first UE receives the first response message and determines whether the SL positioning result of the first UE and/or the second UE is allowed to be provide to the client UE, the first UE sends a direct communication acceptance message or a direct communication reject message to the client UE. The direct communication reject message indicates a refusal to establish the PC5 link, and the direct communication acceptance message indicates establishment of the PC5 link.

In some embodiments, the established PC5 link may be used to send the SL positioning result of the first UE and/or the second UE to the client UE.

In this case, it is equivalent to authenticating whether the client UE is allowed to obtain the SL positioning result of the to-be-measured UE during the process in which the client UE requests to establish the PC5 link with the first UE.

If the second request message includes, in addition to the information of the client UE, information of the to-be-measured UE, it may be considered that the client UE requests the SL behavior result of the to-be-measured UE. The to-be-measured UE may include but is not limited to the first UE and/or the second UE. The second UE may be any UE different from the first UE.

As an example, S1220 may include: sending the first request message to the first network device in a case where the second request message includes the information of the first UE and the second UE. In this case, both the first UE and the second UE may be referred to as the to-be-measured UE.

If authorization is required for whether the client UE is allowed to obtain the SL positioning result of the to-be-measured UE, the information of the to-be-measured UE contained in the second request message needs to be sent to the first network device. In this way, the first network device can not only determine whether the client UE is authorized to obtain the SL positioning result according to subscription data of the client UE, but also check the privacy configuration of the to-be-measured UE according to the information of the to-be-measured UE to determine whether the SL positioning result of the to-be-measured UE is allowed to be exposed to the client UE.

If the first request message is sent to the first network device, the first response message returned by the first network device will be received. The first response message informs the first UE whether the client UE is allowed to obtain the SL positioning result and/or whether the client UE is allowed to obtain the SL positioning result of the to-be-measured UE.

As shown in FIG. 2C, embodiments of the present disclosure provide an information processing method, which is performed by a first UE and includes the following operations.

S1310: a second request message is received; and the second request message is used by the client UE to request to establish a PC5 link. The PC5 link is at least capable of providing the SL positioning result to the client UE, and the second request message may at least include information of the client UE. In some embodiments, the second request message may also include: information of the first UE and the second UE.

S1320: a first request message is sent to the first network device according to the second request message.

S1330: a first response message returned by the first network device is received.

S1140: it is determined whether to provide an SL positioning result between the first UE and the second UE to the client UE according to the first response message.

S1340: the PC5 link is established with the client UE, in a case where the first response message indicates that the client UE is allowed to obtain the SL positioning result.

The established PC5 link may be used by the first UE to send the SL positioning result of the first UE and/or the second UE to the client UE.

That is, in this embodiment, the PC5 link is established with the client UE in a case where the first response message indicates that the client UE has the authority to obtain the SL positioning result, thereby reducing the establishment of unnecessary PC5 link.

For example, in a case where the first response message indicates that the client UE has the authority to obtain the SL positioning result of the to-be-measured UE, the PC5 link is established with the client. That is, in this case, if the client UE has the authority to obtain the SL positioning result, but it is indicated, according to the privacy configuration of the to-be-measured UE, that the SL positioning result of the to-be-measured UE cannot be exposed to the client UE, then similarly, it is determined not to establish the PC5 link between the first UE and the client UE.

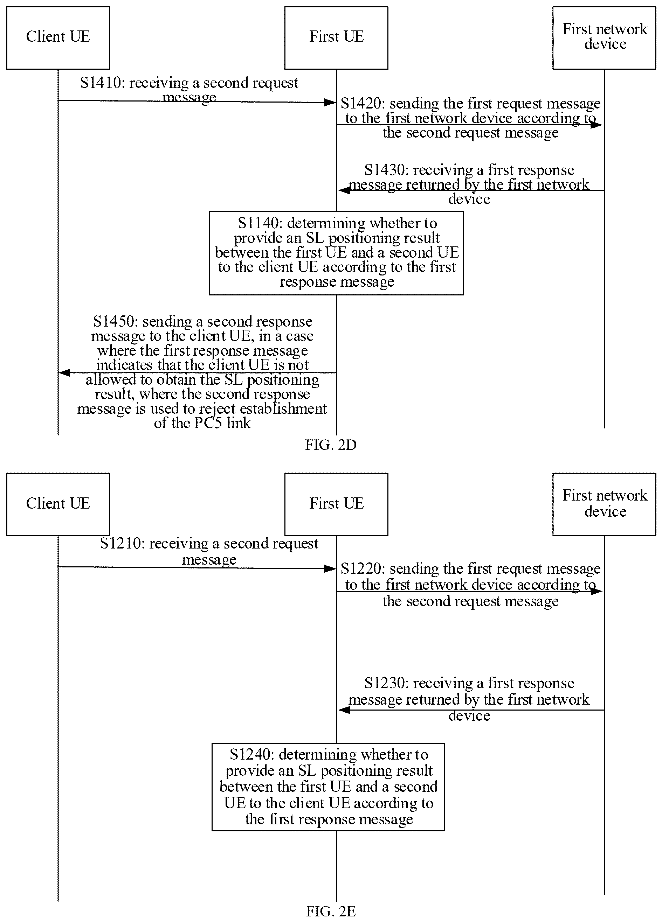

As shown in FIG. 2D, embodiments of the present disclosure provide an information processing method, which is performed by a first UE and includes the following operations.

S1410: a second request message is received; and the second request message is used by the client UE to request to establish a PC5 link. The PC5 link is at least capable of providing the SL positioning result to the client UE. For example, the second request message at least includes information of the client UE. In some embodiments, the second request message may also include: information of the first UE and the second UE.

S1420: a first request message is sent to the first network device according to the second request message.

S1430: a first response message returned by the first network device is received.

S1140: it is determined whether to provide an SL positioning result between the first UE and the second UE to the client UE according to the first response message.

S1450: a second response message is sent to the client UE in a case where the first response message indicates that the client UE is not allowed to obtain the SL positioning result, and the second response message is used to reject establishment of the PC5 link.

In an embodiment of the present disclosure, in a case where the first response message indicates that the client UE does not have the authority to obtain the SL positioning result, that is, the client UE is not allowed to obtain the SL positioning result, there is no need to establish the PC5 link with the client UE. In this case, the first UE sends a rejection message to the client UE, and the rejection message may indicate the rejection of the establishment of the PC5 link.

As shown in FIG. 2E, embodiments of the present disclosure provide an information processing method, which is performed by a first UE and includes the following operations.

S1510: a third request message is received, the third request message is used by the client UE to request to obtain an SL positioning service between the first UE and the second UE; and the third request message may at least include information of the client UE. In some embodiments, the third request message may also include information of the first UE and the second UE.

S1520: a first request message is send to the first network device according to the third request message.

S1530: a first response message returned by the first network device is received.

S1540: it is determined whether to provide an SL positioning result between the first UE and the second UE to the client UE according to the first response message.

For example, the third request message may include a service code of the SL positioning service. If the third request message carries the service code, it may be considered that the client UE requests to perform the SL positioning service.

The first UE and the second UE may both be referred to as the to-be-measured UE. For example, the third request message may further include information of the to-be-measured UE, and the information of the to-be-measured UE may include a user information identifier (User Info Identifier).

If the third request message carries the information of the to-be-measured UE, it may be considered that the UE sending the third request message needs to request the SL positioning result of the to-be-measured UE. In this case, S1520 may include: sending the first request message to the first network device in a case where the third request message includes information of the first UE and the second UE, otherwise the first request message may not be sent to the first network device.

In some embodiments, the first request message may include the information of the client UE and the information of the to-be-measured UE, so that it is convenient for the network side device to perform two levels of authorization (or called double authorization, two types of authorization, two levels of verification, double verification, two types of verification) on whether the client UE is allowed to obtain the SL positioning result of the to-be-measured UE.

For example, the third request message may be a message sent by the client UE to the first UE via an established PC5 link. In this case, after the first UE receives the first response message, if the first response message indicates that the client UE is allowed to obtain the SL positioning result of the to-be-measured UE, the first UE sends the first response message to the client UE via the established PC5 link, and the first response message may be an SL positioning response message. The first response message may directly carry the SL positioning result of the to-be-measured UE.

That is, in some embodiments, the method further includes: sending a third response message including the SL positioning result to the client UE via an established PC5 link, in a case where the first response message indicates that the client UE is allowed to obtain the SL positioning result; or sending a third response message not including the SL positioning result to the client UE via an established PC5 link, in a case where the first response message indicates that the client UE is not allowed to obtain the SL positioning result.

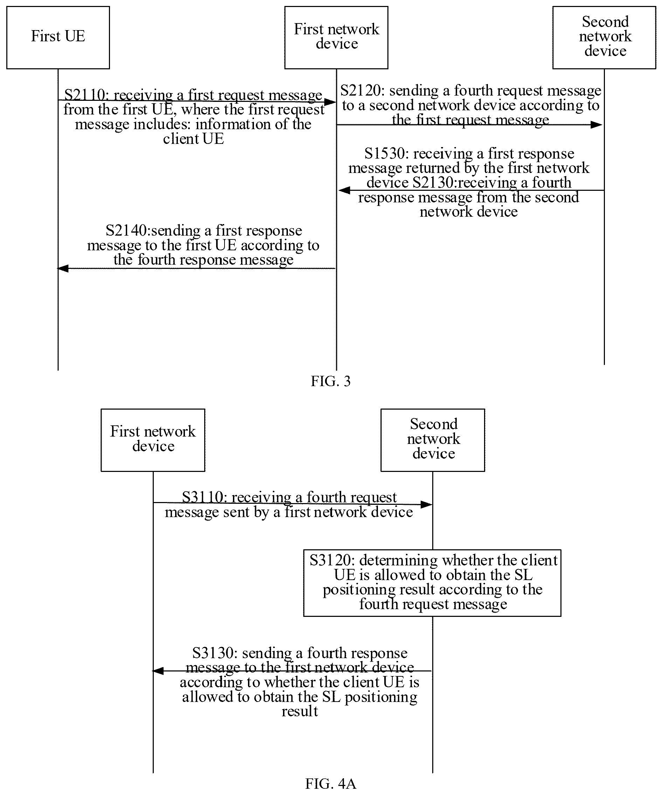

As shown in FIG. 3, embodiments of the present disclosure provide an information processing method, which is performed by a first network device and includes the following operations.

S2110: a first request message is received from a first UE, the first request message is used to request the first network device to determine whether a client UE is allowed to obtain a sidelink (SL) positioning result. The first request message includes: information of the client UE. In some embodiments, the first request message may also include: information of the first UE and a second UE.

S2120: a fourth request message is sent to a second network device according to the first request message; the fourth request message is used to request the second network device to determine whether the client UE is allowed to obtain the SL positioning result; and the fourth request message at least includes the information of the client UE.

S2130: a fourth response message is received from the second network device; and the fourth response message at least indicates whether the client UE is allowed to obtain the SL positioning result.

S2140: a first response message is sent to the first UE according to the fourth response message.

Here, both the first network device and the second network device may be core network devices. For example, the first network device includes: an access management function (AMF); and/or the second network device includes: a gateway mobile location center GMLC.

For example, the first request message may include an authorization request message. The authorization request message may be a message used for SL positioning service authorization.

The information of the client UE may include a user information identifier of the client UE.

In some embodiments, the first request message may also include a service code of the SL positioning service, and the service code may indicate that the client UE requests to obtain the SL positioning service, and then it needs to authorize whether the client UE is allowed to obtain the SL positioning result.

The first UE and the second UE each are to-be-measured UE. The first request message may also include the information of the first UE and the second UE, that is, the first request message may also include information of the to-be-measured UE, and the information of the to-be-measured UE may include: a user information identifier of the to-be-measured UE.

The aforementioned user information identifier is an identification information of the UE. In a specific implementation, the user information identifier may also be other identifiers that are recognizable by the core network device, such as a subscription permanent identifier (SUPI).

The information of the to-be-measured UE may be used by the network side device to check privacy configuration of the to-be-measured UE, so as to determine whether the SL positioning result of the to-be-measured UE is allowed to be exposed to the client UE.

In embodiments of the present disclosure, the first network device sends the fourth request message to the second network device, and the second network device determines whether the client UE is authorized (allowed) to obtain the SL positioning result or whether the client UE is authorized to obtain the SL positioning result of the to-be-measured UE. The fourth request message may be generated based on the first request message. For example, the fourth request message includes the information of the client UE. Alternatively, the fourth request message may include the information of the client UE, as well as the information of the first UE and the second UE.

The first network device will receive the fourth response message sent by the second network device. The fourth response message may be used by the first network device to determine whether the client UE is authorized to obtain the SL positioning result, or the fourth response message may be used by the first network device to determine whether the client UE is authorized to obtain the SL positioning result of the to-be-measured UE.

In this way, the first network device may send the first response message to the first UE according to the fourth response message. For example, the fourth response message indicates that the client UE is allowed to obtain the SL positioning result, and an acceptance message is sent to the first UE; the fourth response message indicates that the client is not allowed to obtain the SL positioning result, and a rejection message is sent to the first UE. Alternatively, the fourth response message indicates that the client UE is allowed to obtain the SL positioning result of the to-be-measured UE, and an acceptance message is sent to the first UE; otherwise, the fourth response message indicates that the client is not allowed to obtain the SL positioning result of the to-be-measured UE, and a rejection message is sent to the first UE.

In this way, the first network device assists the first UE in authenticating whether the client has the authority to obtain the SL positioning result or whether the client is allowed to obtain the SL positioning result of the to-be-measured UE, thereby ensuring the security of the SL positioning result.

As shown in FIG. 4A, embodiments of the present disclosure provide an information processing method, which is performed by a second network device and includes the following operations.

S3110: a fourth request message is received from a first network device; the fourth request message is used to request the second network device to determine whether a client UE is allowed to obtain an SL positioning result; and the fourth request message at least includes: information of the client UE. In some embodiments, the fourth request message may also include: information of a first UE and a second UE.

S3120: it is determined, according to the fourth request message, whether the client UE is allowed to obtain the SL positioning result.

S3130: a fourth response message is sent to the first network device according to whether the client UE is allowed to obtain the SL positioning result.

The second network device may also be a core network device, and the core network device may include but is not limited to a GMLC.

The information of the client UE included in the fourth request message may be a user information identifier.

After receiving the information of the client UE, the second network device will further determine whether the client UE is allowed to obtain the SL positioning result, and then send the fourth response message to the first network device according to whether the client UE is allowed to obtain the SL positioning result. In this way, the first network device may return the first response message to the first UE according to the fourth response message, thereby assisting the first UE in authorizing whether the client UE is allowed to obtain the SL positioning result of the client UE, so as to ensure the security of the SL positioning result of a to-be-measured UE.

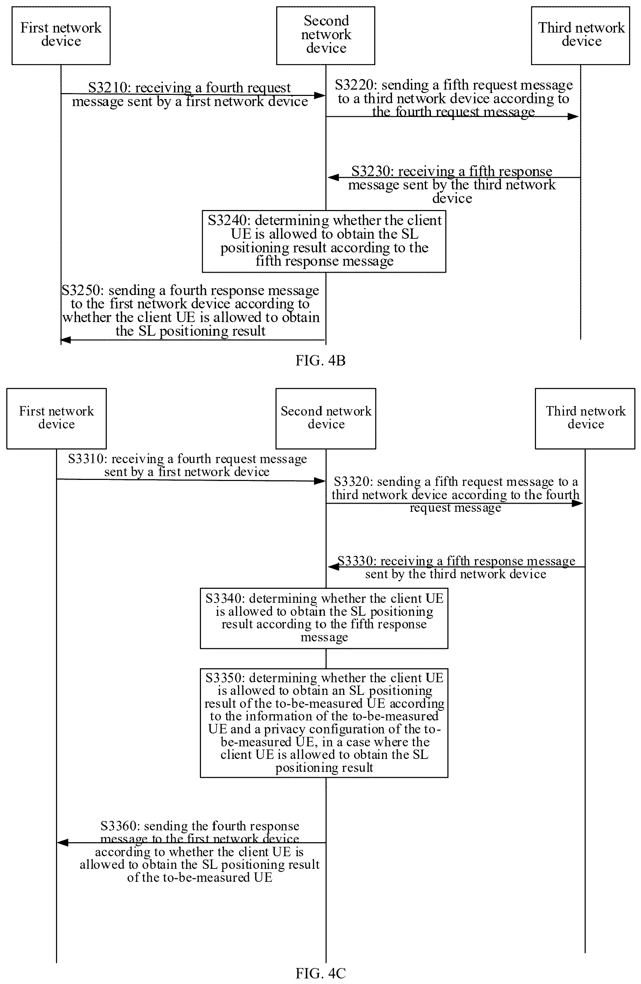

As shown in FIG. 4B, embodiments of the present disclosure provide an information processing method, which is performed by a second network device and includes the following operations.

S3210: a fourth request message is received from a first network device; the fourth request message is used to request the second network device to determine whether a client UE is allowed to obtain an SL positioning result; and the fourth request message at least includes: information of the client UE. In some embodiments, the fourth request message may also include: information of a first UE and a second UE.

S3220: a fifth request message is sent to a third network device according to the fourth request message, the fifth request message is used to request the third network device to determine whether the client UE is allowed to obtain the SL positioning result; and the fifth request message at least includes the information of the client UE.

S3230: a fifth response message is received from the third network device.

S3240: it is determined according to the fifth response message whether the client UE is allowed to obtain the SL positioning result.

S3250: a fourth response message is sent to the first network device according to whether the client UE is allowed to obtain the SL positioning result.

The third network device may be a network function (or a network node) that stores or is able to obtain subscription data of the client UE.

For example, the third network device may be a user data management (UDM) and/or a unified data repository (UDR).

The fourth request message may be an authorization request message, and the authorization request message may at least include the information of the client UE. In some embodiments, the fourth request message may also include information of a to-be-measured UE.

The third network device will receive the fifth request message sent by the second network device according to the fourth request message, and the fifth request message also includes at least the information of the client UE. Further, the fifth request message may also include: the information of the to-be-measured UE.

After receiving the fifth request message, the third network device will send the fifth response message to the second network device according to the fifth request message, so the second network device will receive the fifth response message. The second network device will obtain, according to the fifth response message, a determination result of whether the client is allowed to obtain the SL positioning result.

The determination result may indicate that the client UE is allowed to obtain the SL positioning result, or that the client UE is not allowed to obtain the SL positioning result.

Alternatively, the determination result may indicate that the client UE is allowed to obtain the SL positioning result of the to-be-measured UE, or that the client UE is not allowed to obtain the SL positioning result of the to-be-measured UE.

In an embodiment of the present disclosure, after the fourth response message is sent to the first network device, the first network device will send a first response message to the first UE for the first UE to determine whether it needs to provide the SL positioning result or the SL positioning result of the to-be-measured UE to the client UE through the PC5 interface.

In some embodiments, the fifth response message includes: an authorization result provided by the third network device; and the authorization result indicates whether the client UE is allowed to obtain the SL positioning result.

In this embodiment, the fifth response message directly includes the authorization result. The authorization result may be indicated by one or more bits, and the authorization result directly indicates whether the client UE is allowed to obtain the SL positioning result, or directly indicates whether the client UE is allowed to obtain the authorization result of the to-be-measured UE. In this way, after the second network device receives the fifth response message, it does not need to verify authorization by itself, but may directly send the fourth response message to the second network device according to the authorization result in the fifth response message.

For example, the fourth response message may include the authorization result in the fifth response message.

In some embodiments, the fifth response message includes: the subscription data of the client UE.

The determining, according to the fifth response message, whether the client UE is allowed to obtain the SL positioning result includes: determining whether the client UE is allowed to obtain the SL positioning result according to the subscription data of the client UE.

In this embodiment, the third network device returns the subscription data to the second network device through the fifth response message, so that the second network device may determine by itself, based on the subscription data of the client UE, whether the client UE is allowed to obtain the SL positioning result.

In some embodiments, the fourth request message further includes: the information of the to-be-measured UE; the to-be-measured UE includes: a first UE and a second UE; and the method further includes the following operations.

As shown in FIG. 4C, embodiments of the present disclosure provide an information processing method, which is performed by a second network device, and includes the following operations.

S3310: a fourth request message is received from a first network device; the fourth request message is used to request the second network device to determine whether a client UE is allowed to obtain an SL positioning result; and the fourth request message at least includes: information of the client UE.

S3320: a fifth request message is sent to a third network device according to the fourth request message, the fifth request message is used to request the third network device to determine whether the client UE is allowed to obtain the SL positioning result; and the fifth request message at least includes the information of the client UE.

S3330: a fifth response message is received from the third network device.

S3340: it is determined according to the fifth response message whether the client UE is allowed to obtain the SL positioning result.

S3350: it is determined, according to information of a to-be-measured UE and a privacy configuration of the to-be-measured UE, whether the client UE is allowed to obtain an SL positioning result of the to-be-measured UE, in a case where the client UE is allowed to obtain the SL positioning result.

S3360: a fourth response message is sent to the first network device according to whether the client UE is allowed to obtain the SL positioning result of the to-be-measured UE.

In embodiments of the present disclosure, the second network device will determine, according to subscription data of the client UE, whether the client UE is allowed to obtain the SL positioning result. In some embodiments, if the client UE has a subscription to an SL positioning service, and/or the client UE has a subscribed client for the SL positioning service, the client UE is allowed to obtain the SL positioning result. Alternatively, according to the subscription data, if a current time period is within a time period during which the client UE can obtain the SL positioning result, and/or if the client UE is currently within a geographical range where the client UE is allowed to obtain the SL positioning result, it is determined that the client UE in a current state has the authority to obtain the SL positioning service, that is, in the current state, the client UE is allowed to obtain the SL positioning result.

In a case where it is determined that the client UE is allowed to obtain the SL positioning result, it may also be determined, according to the privacy configuration of the to-be-measured UE, whether the client is allowed to obtain the SL positioning result of the to-be-measured UE. The privacy configuration of the UE may be pre-configured in the second network device such as GMLC. The privacy configuration of the UE may also be requested by the second network device from the third network device.

The privacy configuration of the to-be-measured UE may be a part of the subscription data of the to-be-measured UE. If the privacy configuration of the to-be-measured UE is recorded in the third network device as the subscription data of the to-be-measured UE, the fifth request message may also carry the information of the to-be-measured UE, so that the third network device may query the subscription data of the client UE according to the information of the client UE, and determine whether the client UE is allowed to obtain the SL positioning result according to the subscription data of the client UE; further, the third network device may also query the privacy configuration in the subscription data of the to-be-measured UE according to the information of the to-be-measured UE, and determine whether the client UE is allowed to obtain the SL positioning result of the to-be-measured UE according to the privacy configuration of the to-be-measured UE. Of course, in the case where the fifth request message also includes the information of the to-be-measured UE, the third network device may return the subscription data of the client UE and the privacy configuration of the to-be-measured UE to the second network device together.

For example, in the case where the client UE is allowed to obtain the SL positioning result of the to-be-measured UE, the fourth response message indicating acceptance is sent to the second network device, and the fourth response message may be an acceptance message, informing the first network device that the client UE is allowed to obtain the SL positioning result of the to-be-measured UE. An another example, in the case where the client UE is not allowed to obtain the SL positioning result of the to-be-measured UE, the fourth response message indicating rejection is sent to the second network device, and the fourth response message may be a rejection message, informing the first network device that the client UE is not allowed to obtain the SL positioning result of the to-be-measured UE.

In a case where the privacy configuration of the to-be-measured UE includes an indicator which indicate that privacy authorization needs to be verified by the UE, a sixth request message is sent to the first network device, and the sixth request message is forwarded by the first network device to the to-be-measured UE to notify the to-be-measured UE to verify the privacy authorization, so as to learn whether the to-be-measured UE currently allows its SL positioning result to be exposed.

A sixth response message is received from the first network device.

In a case where it is determined according to the sixth response message that the client UE is allowed to obtain the SL positioning result, it is verified whether the to-be-measured UE allows its current location information to be exposed. For example, the current location information includes but is not limited to the SL positioning result of the to-be-measured UE.

If the sixth response message indicates a verification result, it indicates whether the user of the to-be-measured UE allows the SL positioning result of the to-be-measured UE to be exposed to the client UE.

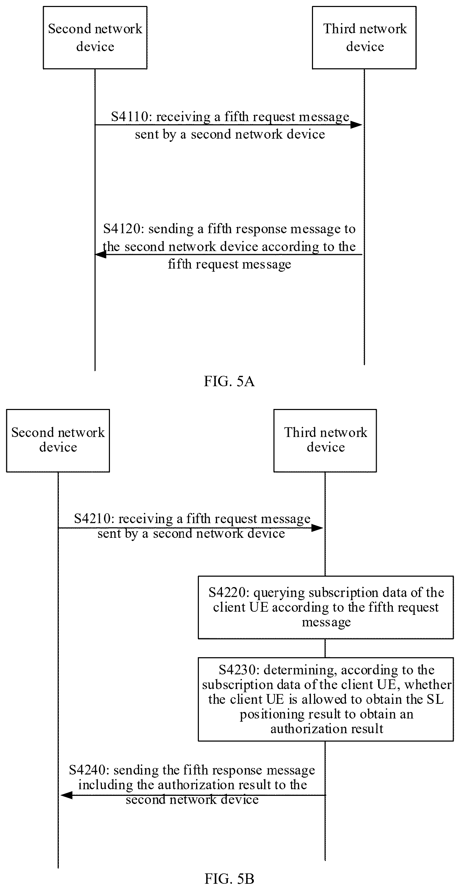

As shown in FIG. 5A, embodiments of the present disclosure provide an information processing method, which is performed by a third network device, and includes the following operations.

S4110: a fifth request message is received from a second network device, the fifth request message is used to request the third network device to determine whether a client UE is allowed to obtain an SL positioning result; and the fifth request message at least includes: information of the client UE.

S4120: a fifth response message is sent to the second network device according to the fifth request message, and the fifth response message is used for the second network device to determine whether the client UE is allowed to obtain the SL positioning result.

The third network device here may also be a core network device. For example, the core network device may be a user data management (UDM). In some other embodiments, the third network device may also be a unified data repository (UDR).

After receiving the fifth request message from the second network device, the third network device will query subscription data of the client UE according to the information of the client UE included in the fifth request message. The information of the client UE may at least include identification information of the client UE.

After querying the subscription data of the client UE, the fifth response message may be returned to the second network device.

As shown in FIG. 5B, embodiments of the present disclosure provide an information processing method, which is performed by a third network device, and includes the following operations.

S4210: a fifth request message is received from a second network device, the fifth request message is used to request the third network device to determine whether a client UE is allowed to obtain an SL positioning result; and the fifth request message at least includes: information of the client UE.

S4220: subscription data of the client UE is queried according to the fifth request message.

S4230: it is determined according to the subscription data of the client UE whether the client UE is allowed to obtain the SL positioning result to obtain an authorization result.

S4240: a fifth response message including the authorization result is sent to the second network device.

In this embodiment, the third network device directly determines, based on the subscription data of the client UE, whether the client UE is allowed to obtain the SL positioning result to obtain the authorization result, and sends the fifth response message carrying the authorization result to the second network device.

In this way, after receiving the fifth response message, the second network device may directly send the fourth response message to the first network device according to the authorization result included in the fifth response message.

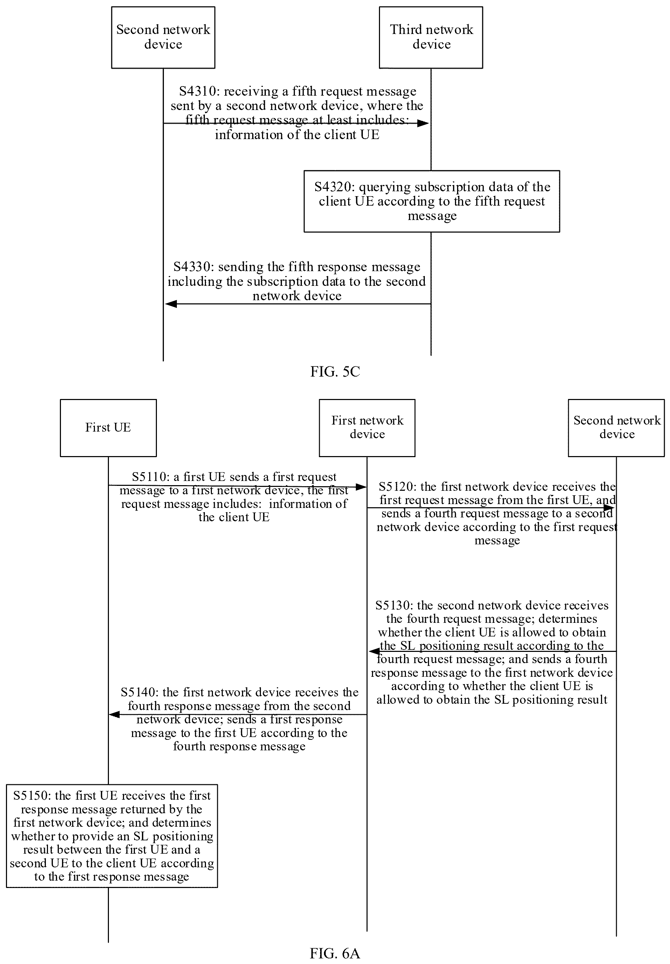

As shown in FIG. 5C, embodiments of the present disclosure provide an information processing method, which is performed by a third network device, and includes the following operations.

S4310: a fifth request message is received from a second network device, the fifth request message is used to request the third network device to determine whether a client UE is allowed to obtain an SL positioning result; and the fifth request message at least includes: information of the client UE.

S4320: subscription data of the client UE is queried according to the fifth request message.

S4330: a fifth response message including the subscription data is sent to the second network device.

In embodiments of the present disclosure, the third network device sends the subscription data to the second network device, and the second network device directly determines by itself whether the client UE is allowed to obtain the SL positioning result according to the subscription data of the client UE.

In some embodiments, if two levels of authorization are required, i.e., whether the client UE is allowed to obtain the SL positioning result and whether the client UE is allowed to obtain the SL positioning result of the to-be-measured UE, the fifth request message may include information of the to-be-measured UE. The third network device may provide privacy configuration of the to-be-measured UE and the subscription data of the client UE to the second network device together based on the information of the to-be-measured UE. Alternatively, after the verification is completed based on the privacy configuration of the to-be-measured UE, the fifth response message including an authorization result is directly returned to the second network device.

As shown in FIG. 6A, embodiments of the present disclosure provide an information processing method, which includes the following operations.

S5110: a first UE sends a first request message to a first network device, the first request message is used to request the first network device to determine whether a client UE is allowed to obtain an SL positioning result; the first request message at least includes: information of the client UE; and the information of the client UE at least indicates a UE requesting to obtain the SL positioning result.

S5120: the first network device receives the first request message from the first UE, and sends a fourth request message to a second network device according to the first request message; the fourth request message is used to request the second network device to determine whether the client UE is allowed to obtain the SL positioning result; and the fourth request message at least includes: the information of the client UE.

S5130: the second network device receives the fourth request message; determines whether the client UE is allowed to obtain the SL positioning result according to the fourth request message; and sends a fourth response message to the first network device according to whether the client UE is allowed to obtain the SL positioning result.

S5140: the first network device receives the fourth response message from the second network device; the fourth response message at least indicates whether the client UE is allowed to obtain the SL positioning result; and the first network device sends a first response message to the first UE according to the fourth response message.

S5150: the first UE receives the first response message returned by the first network device; and determines whether to provide an SL positioning result between the first UE and a second UE to the client UE according to the first response message.

The first UE may be any of the to-be-measured UE.

The first network device may be a serving AMF for the first UE.

The second network node may be a GMLC.

The third network node may include, but is not limited to, a UDM and/or a UDR.

The first request message may be an authorization request message and/or an SL positioning request message.

If the first request message is the authorization request message, the first UE is able to complete the authorization of whether the client UE is allowed to obtain the SL positioning result, or whether the client UE is allowed to obtain the SL positioning result of the to-be-measured UE before establishing a PC5 link with the client UE.

In some embodiments, receiving, by the second network device, the fourth request message; and determining, by the second network device, whether the client UE is allowed to obtain the SL positioning result according to the fourth request message, includes:
sending, by the second network device, a fifth request message to a third network device according to the fourth request message, where the fifth request message is used to request the third network device to determine whether the client UE is allowed to obtain the SL positioning result; and the fifth request message at least includes: the information of the client UE;
receiving, by the third network device, the fifth request message sent by the second network device, where the fifth request message at least includes: the information of the client UE;
sending, by the third network device, a fifth response message to the second network device according to the fifth request message, where the fifth response message is used for the second network device to determine whether the client UE is allowed to obtain the SL positioning result; and
determining, by the second network device, whether the client UE is allowed to obtain the SL positioning result according to the fifth response message.

Here, the third network device may be a UDM or a UDR. The fifth response message may include the subscription data of the client UE or the authorization result of the third network device.

The client UE may obtain the SL positioning result between two UEs via the PC5 link.

Embodiments of the present disclosure propose an authorization method for an SL client UE to obtain an SL positioning result via a PC5 link.

When the client UE requests the SL positioning result of the to-be-measured UE via the PC5 link, the client UE is authorized before it obtains the result.

Before the client UE obtains the SL positioning result via PC5, it needs to establish a PC5 link with one of the to-be-measured UEs. Assuming that the SL positioning direct communication with the client UE reuses a PC5 link establishment procedure in the related art, it may be determined during the PC5 link establishment procedure whether the client UE is allowed to obtain the SL positioning result of the to-be-measured UE.

When the to-be-measured UE receives the request from the client UE, to prevent the client UE from requesting an un-allowed SL positioning result from the to-be-measured UE, the to-be-measured UE needs to authorize the client UE. As the to-be-measured UE is lack of information for authorization on its own, it needs to request the network for authorizing the client UE.

The network function capable of authorizing the client UE could be the UDM which has the client UE's subscription data containing the needed information for authorization. The network function doing authorization could also be a NF that can interact with the UDM to retrieve the needed information for authorization.

In addition, the network function doing authorization should be able to check the privacy requirement of the to-be-measured UE. If the to-be-measured UE does not allow its SL position to be exposed, the client UE cannot be authorized to request the SL positioning result. Based on the authorization result returned by the network, the to-be-measured UE determines whether to establish a PC5 link with the client UE.

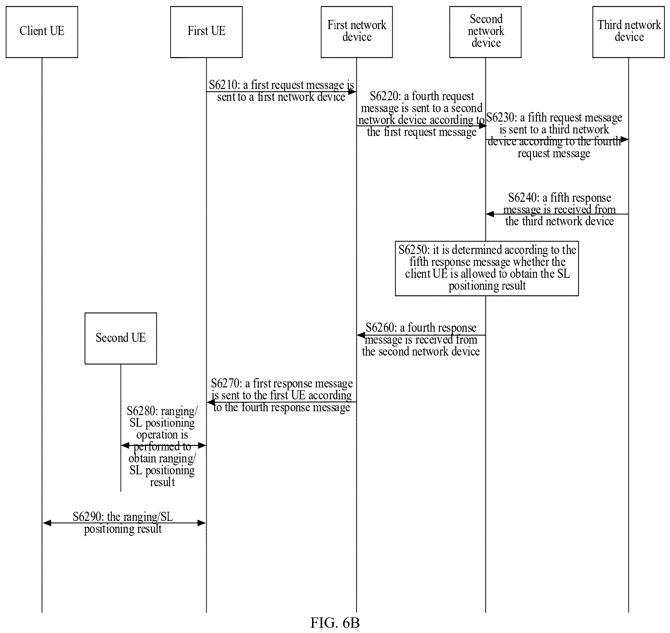

As shown in FIG. 6B, embodiments of the present disclosure provide an information processing method, which may include the following operations.

S6210: a first request message is sent to a first network device; the first request message is used to request the first network device to determine whether a client UE is allowed to obtain an SL positioning result; and the first request message at least includes: information of the client UE.

S6220: a fourth request message is sent to a second network device according to the first request message; the fourth request message is used to request the second network device to determine whether the client UE is allowed to obtain the SL positioning result; and the fourth request message at least includes: the information of the client UE.

S6230: a fifth request message is sent to a third network device according to the fourth request message, the fifth request message is used to request the third network device to determine whether the client UE is allowed to obtain the SL positioning result; and the fifth request message at least includes: the information of the client UE.

S6240: a fifth response message is received from the third network device.

S6250: it is determined according to the fifth response message whether the client UE is allowed to obtain the SL positioning result.

S6260: a fourth response message is received from the second network device; and the fourth response message at least indicates whether the client UE is allowed to obtain the SL positioning result.

S6270: a first response message is sent to the first UE according to the fourth response message.

S6280: a ranging/SL positioning operation is performed to obtain a ranging/SL positioning result.

S6290: the ranging/SL positioning result is sent to the client UE.

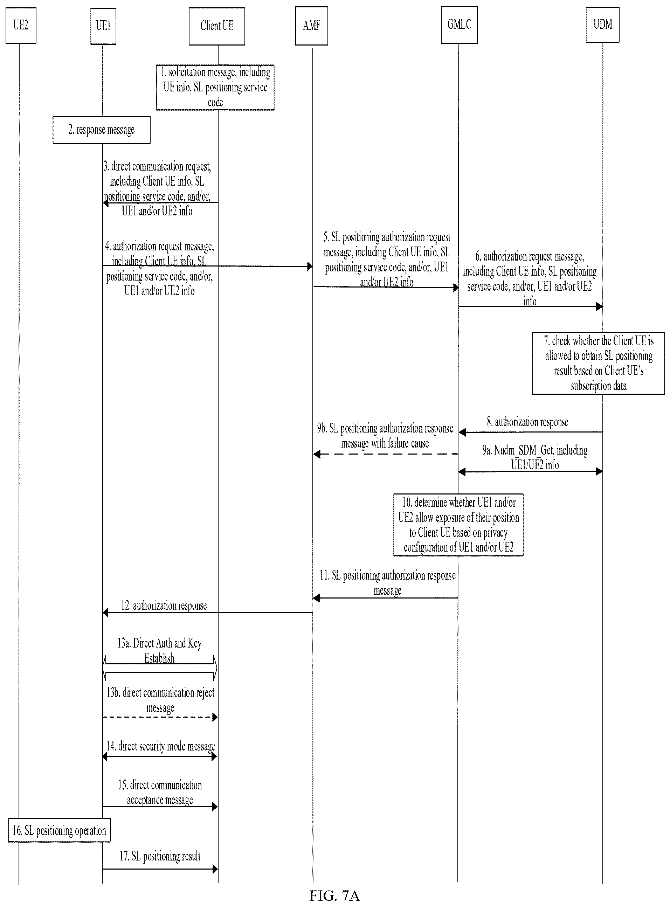

As shown in FIG. 7A, embodiments of the present disclosure provide an information processing method, which may include the following operations.
1. The client UE broadcasts a protected request message (also called solicitation message), which may include at least UE1 information (information of UE1) and an SL positioning service code, such as a request message with integrity protection and/or confidentiality protection using a security key. The security key may include: a discovery key used for mutual discovery between the client UE and the to-be-measured UE. For example, the request message (also called solicitation message) here is a message for mutual discovery between the client and the to-be-measured UE.
2. UE1 receives the protected request message and decodes it using a discovery security key. Upon the match of discovery, UE1 broadcasts a protected response message. UE1 here is one of the to-be-measured UEs for the SL positioning service. The to-be-measured UEs may also include UE2. An SL positioning operation is performed between UE1 and UE2 to obtain an SL positioning result. The SL positioning result here may be generated based on measurement data during the SL positioning operation. Here, UE1 may be the first UE in the aforementioned embodiments.
3. Upon receiving the response message from UE1, the client UE performs a direct PC5 link establishment procedure with UE1 by sending a direct communication request (DCR) message. The message contains at least the information of the client UE, the information of the to-be-measured UE, service information (including but not limited to the SL positioning service code) and the information of the to-be-measured UE, and the client UE needs to request the SL positioning result. The information of the to-be-measured UE here may include: information of UE1 and/or UE2. The direct communication request message here may be a type of the aforementioned third request message.
   Before the PC5 link establishment, it is necessary to check whether the client UE has the authority to obtain the SL positioning result, and/or whether the client UE has the authority to obtain the SL positioning result of UE1 and/or UE2. After it is determined that the client UE is allowed to obtain the SL positioning result, and/or the client UE is allowed to obtain the SL positioning result of the to-be-measured UE, the PC5 link is established.
4. For authorizing the client UE, UE1 sends an authorization request message to AMF via an NAS message. The request contains at least the information of the client UE (i.e., client UE info for short), the information of the to-be-measured UE (i.e., the to-be-measured UEs info for short) and the SL positioning service code. For example, the authorization request message may be a kind of first request message mentioned in any of the above embodiments.
5. The AMF sends an SL positioning authorization request to GMLC, and the SL positioning authorization request includes the information of the client UE, and the information of UE1 and UE2. The SL positioning authorization request sent by the AMF to the GMLC here may be a kind of fourth request message mentioned in any of the above embodiments.
6. The GMLC sends an authorization request to UDM, and the request includes the information of the client UE, and the information of UE1 and UE2. The authorization request sent by the GMLC to the UDM here may be a kind of fifth request message mentioned in any of the above embodiments.
7. The UDM checks whether the client UE is allowed to obtain the SL positioning result of UE1/UE2 based on the subscription data of the client UE for the SL positioning service, containing the information of the to-be-measured UE, from which the client UE is allowed to request positions.
   It is worth noting that the relevant subscription data may be updated in the UDM upon the update of the requirement or logic of SL positioning service. The update could be done offline in the UDM or be negotiated between the UE and the UDM via control plane procedure.
8. The UDM returns the authorization result to the GMLC. The authorization result may be carried in the fifth response message as described in any of the above embodiments and returned to the GMLC.
9a. If the authorization is successful, the GMLC invokes a Nudm_SDM_Get service operation towards the UDM of the to-be-measured UEs respectively to get the privacy configuration of UE1/UE2 identified by its UE1 info/ UE2 info. Then the GMLC proceeds to step 10.
9b. If the authorization fails, the GMLC returns an SL positioning response with a failure cause to the AMF, and then the step 12 proceeds.
10. When receiving the privacy configuration of UE1/UE2, the GMLC checks whether UE1/UE2 allow the exposure of their position against UE1/UE2 privacy configuration.
11. The GMLC returns an SL positioning authorization response to the AMF. The SL positioning authorization response returned by the GMLC to the AMF may be a kind of fourth response message as described in any of the aforementioned embodiments.
12. The AMF forwards the authorization result to UE1 via an NAS message. The NAS message sent by the AMF to UE1 may be the aforementioned fourth response message.
13a. If the authorization is successful, UE1 performs a direct authentication and key establish procedure with the client UE. Then, UE1 proceeds to step #14.
13b. If the authorization fails, UE1 sends a direct communication reject message to the client UE, which may contain the failure cause. Then the following steps do not need to be performed. The direct communication acceptance message and the direct communication reject message here may be a kind of third response message as described in any of the aforementioned embodiments.
14. UE1 and the client UE perform direct security mode procedure to establish PC5 security context.
15. Upon successful PC5 security establishment, UE1 returns a direct communication acceptance message to the client UE.
16. When sending the direct communication acceptance message, UE1 starts to perform the SL positioning procedure with the other to-be-measured UE (i.e., UE2).
17. UE1 obtains the SL positioning result and sends it to the client UE via user plane of PC5 link.

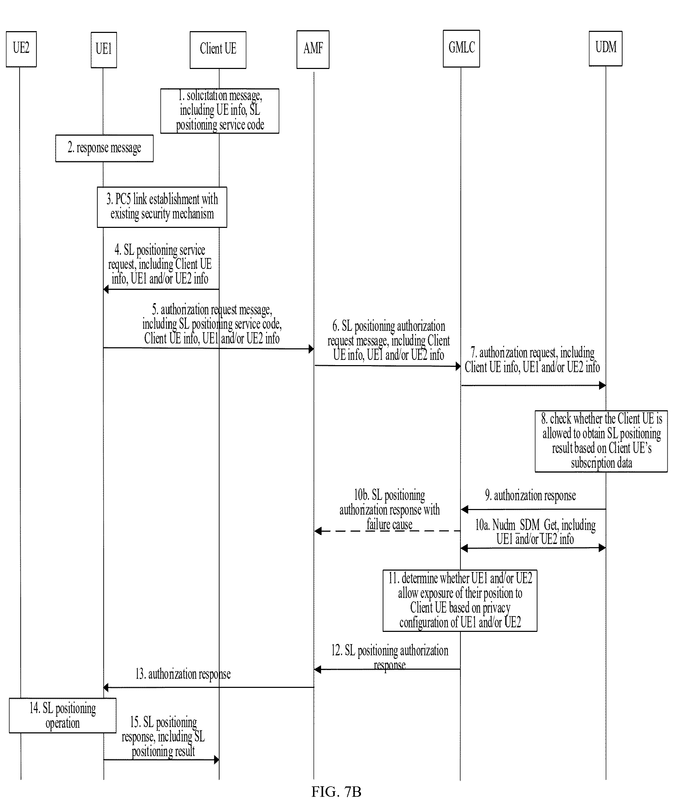

As shown in FIG. 7B, embodiments of the present disclosure provide an information processing method, which may include the following operations.
1. The client UE broadcasts a protected request message (also called solicitation message) which may include at least UE1 information (information of UE1) and an SL positioning service code, such as a request message with integrity protection and/or confidentiality protection using a security key. The security key may include: a discovery key used for mutual discovery between the client UE and the to-be-measured UE. For example, the request message (also called solicitation message) here is a message for mutual discovery between the client and the to-be-measured UE.
2. UE1 receives the protected request message and decodes it using a discovery security key. Upon the match of discovery, UE1 broadcasts a protected response message. UE1 here is one of the to-be-measured UEs for the SL positioning service. The to-be-measured UEs may also include UE2. An SL positioning operation is performed between UE1 and UE2 to obtain an SL positioning result. The SL positioning result here may be generated based on measurement data during the SL positioning operation. Here, UE1 may be the first UE in the aforementioned embodiments.
3. A PC5 link is established between UE1 and the client UE, for example, a secure PC5 link is established based on a relevant security mechanism.
4. The client UE sends an SL positioning request message to UE1 via the established PC5 link, and the SL positioning request message includes information of the client UE, and information of UE1 and UE2. The SL positioning request message here may be a kind of third request message described above.
5. After receiving the SL positioning request message sent by the client UE, UE1 sends an authorization request to AMF, and the authorization request includes the information of the client UE, and the information of UE1 and UE2. For example, the authorization request message may be a kind of first request message mentioned in any of the above embodiments.
6. The AMF sends an SL positioning authorization request to GMLC, and the SL positioning authorization request includes the information of the client UE, and the information of UE1 and UE2. The SL positioning authorization request sent by the AMF to the GMLC here may be a kind of fourth request message mentioned in any of the above embodiments.
7. The GMLC sends an authorization request to UDM, and the request includes the information of the client UE, and the information of UE1 and UE2. The authorization request sent by the GMLC to the UDM here may be a kind of fifth request message mentioned in any of the above embodiments.
8. The UDM checks whether the client UE is allowed to obtain the SL positioning result of UE1/UE2 based on the subscription data of the client UE for the SL positioning service.
   It is worth noting that the relevant subscription data may be updated in the UDM upon the update of the requirement or logic of SL positioning service. The update could be done offline in the UDM or be negotiated between the UE and the UDM via control plane procedure.
9. The UDM returns the authorization result to the GMLC. The authorization result may be carried in the fifth response message as described in any of the above embodiments and returned to the GMLC.
10a. If the authorization is successful, the GMLC invokes a Nudm_SDM_Get service operation towards the UDM of the to-be-measured UEs respectively to get the privacy configuration of UE1/UE2 identified by its UE1 info/ UE2 info. Then the GMLC proceeds to step 10.
10b. If the authorization fails, the GMLC returns an SL positioning response with a failure cause to the AMF, and then the step 12 proceeds.
11. When receiving the privacy configuration of UE1/UE2, the GMLC checks whether UE1/UE2 allow the exposure of their position against UE1/UE2 privacy configuration.
12. The GMLC returns an SL positioning authorization response to the AMF. The SL positioning authorization response returned by the GMLC to the AMF may be a kind of fourth response message as described in any of the aforementioned embodiments.
12. The AMF forwards the authorization result to UE1 via an NAS message. The NAS message sent by the AMF to UE1 may be the aforementioned fourth response message.
13. If the authorization is successful, UE1 performs a direct authentication and key establish procedure with the client UE. Then, UE1 proceeds to step #14. If the authorization fails, UE1 sends a direct communication reject message to the client UE, which may contain the failure cause. Then the following steps do not need to be performed.
14. UE1 and UE2 perform the SL positioning operation.
15. The SL positioning result is returned to the client UE.

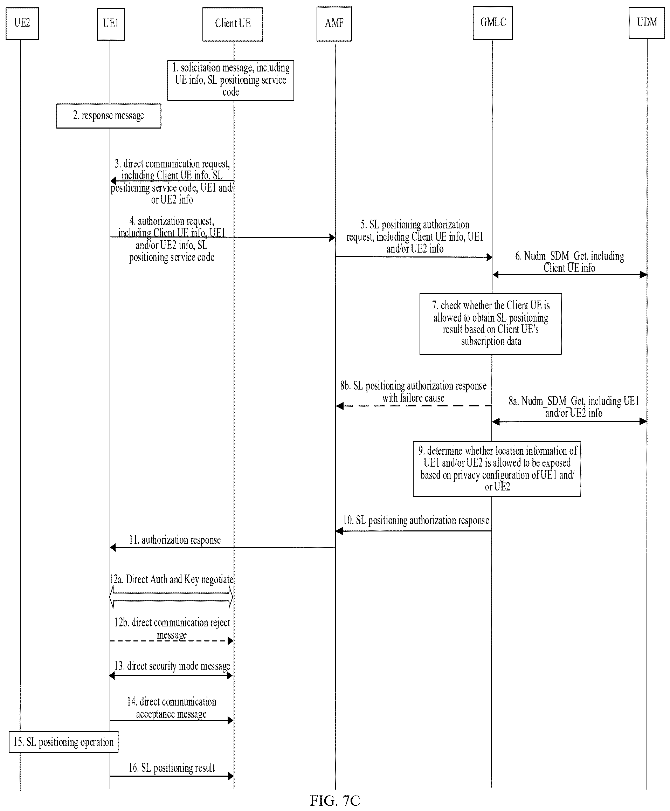

As shown in FIG. 7C, embodiments of the present disclosure provide an information processing method, which may include the following operations.
1. The client UE broadcasts a protected request message (also called solicitation message) which may include at least UE1 information (information of UE1) and an SL positioning service code, such as a request message with integrity protection and/or confidentiality protection using a security key. The security key may include: a discovery key used for mutual discovery between the client UE and the to-be-measured UE. For example, the request message (also called solicitation message) here is a message for mutual discovery between the client and the to-be-measured UE.
2. UE1 receives the protected request message and decodes it using a discovery security key. Upon the match of discovery, UE1 broadcasts a protected response message. UE1 here is one of the to-be-measured UEs for the SL positioning service. The to-be-measured UEs may also include UE2. An SL positioning operation is performed between UE1 and UE2 to obtain an SL positioning result. The SL positioning result here may be generated based on measurement data during the SL positioning operation. Here, UE1 may be the first UE in the aforementioned embodiments.
3. UE1 receives a DCR message from the client UE; and the DCR message here may be a kind of third request message as described hereinbefore.
4. For authorizing the client UE, UE1 sends an SL positioning service request message to AMF via an NAS message. The request contains at least the information of the client UE, the information of the to-be-measured UE and the SL positioning service code.
5. UE1 sends an authorization request to the AMF, which contains the information of the client UE and the information of UE1 and UE2.
6. GMLC invokes a Nudm_SDM_Get service operation to provide the information of the client UE to UDM;
7. GMLC checks, based on subscription data of the client UE obtained from the UDM, whether the client UE is allowed to obtain the SL positioning result of UE1/UE2 against the client UE's subscription data for SL positioning service.
8. If privacy configuration of UE1 and/or UE2 is required for determining whether to expose the location information of UE1 and/or UE2 to the client UE, a Nudm_SDM_Get service operation may be invoked to request the privacy configuration of UE1 and/or UE2 from UDM. The Nudm_SDM_Get service operation may be a kind of fifth request message provided in any of the foregoing embodiments.
9. The UDM checks whether the client UE is allowed to obtain the SL positioning result of UE1/UE2 against the client UE's subscription data for SL positioning service.
10. SL positioning authorization response.
11. Authorization response.
12a. If the authorization is successful, UE1 performs a direct authentication and key establish procedure with the client UE.
12b. If the authorization fails, UE1 returns a direct communication reject message to the client UE.
13. The client UE and UE1 exchange a direct security mode message.
14. UE1 sends a direct communication acceptance message to the client UE.
15. UE1 and UE2 perform the SL positioning operation.
16. The SL positioning result is returned to the client UE.

In summary, technical solutions provided by embodiments of the present disclosure may be as follows:
The UE may perform at least one of the following operations:
The client UE shall be able to include the information of the to-be-measured UE of which it intends to request SL positioning result within the direct communication request when establishing a PC5 link.

The to-be-measured UE is able to request the network to authorize on whether the client UE is allowed to obtain the SL positioning result of the to-be-measured UE, after receiving the DCR message via PC5.

The to-be-measured UE is able to request the network to authorize on whether the client UE is allowed to obtain the SL positioning result of the to-be-measured UE, after receiving the SL positioning request message via SR5.

The to-be-measured UE shall be able to determine whether to perform direct security mode command or abort the direct communication establishment procedure, based on the received authorization result.

The AMF may perform at least one of the following operations:
The AMF shall be able to understand the SL positioning authorization request from the UE.
The AMF shall be able to send the SL positioning authorization request to the GMLC.
The AMF shall be able to receive the SL positioning authorization result from the GMLC.
The AMF shall be able to forward the SL positioning authorization result to the UE.

The GMLC may perform at least one of the following operations:
The GMLC shall be able to understand the SL positioning authorization request from the AMF.
The GMLC shall be able to initiate the authorization check on the client UE with the UDM.
The GMLC shall be able to receive the authorization result from the UDM.
The GMLC shall be able to check whether the client UE is authorized to obtain the SL positioning result of the to-be-measured UE, based on the subscription information of the client UE retrieved from the UDM.
The GMLC shall be able to send the SL positioning authorization result to the AMF.

The UDM may perform at least one of the following operations:
The UDM shall be able to receive and understand the authorization request from the GMLC, which contains the information of the client UE.
The UDM shall be able to check whether the client UE is allowed to obtain the SL positioning result of the to-be-measured UE based on the subscription information.
The UDM shall be able to return the authorization result to the GMLC.
The UDM shall be able to return the SL positioning service related subscription information of the client UE to the GMLC.

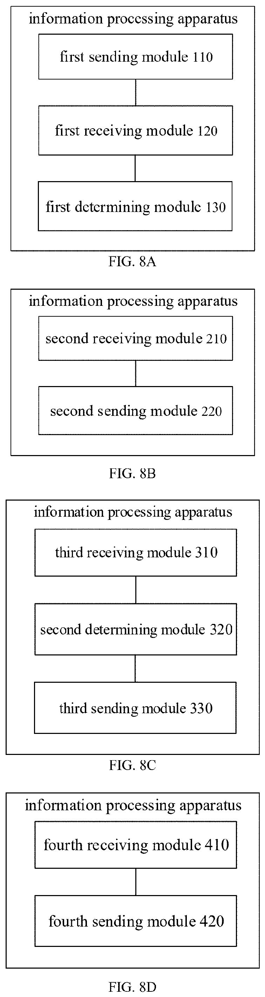

As shown in FIG. 8A, embodiments of the present disclosure provide an information processing apparatus, which includes: a first sending module 110, a first receiving module 120, and a first determining module 130. The first sending module 110 is configured to send a first request message to a first network device, the first request message is used to request the first network device to determine whether a client UE is allowed to obtain a sidelink (SL) positioning result; and the first request message at least includes: information of the client UE. The first receiving module 120 is configured to receive a first response message returned by the first network device. The first determining module 130 is configured to determine whether to provide an SL positioning result between the first UE and a second UE to the client UE according to the first response message.

In some embodiments, the first sending module 110, the first receiving module 120 and the first determining module 130 may be program modules that, when executed by a processor, enable the operations of the above modules to be implemented.

In some other embodiments, the first sending module 110, the first receiving module 120 and the first determining module 130 may be modules with a combination of software and hardware, the module with the combination of software and hardware includes but is not limited to a programmable module; and the programmable module may be a field programmable module and/or a complex programmable module.

In some other embodiments, the first sending module 110, the first receiving module 120 and the first determining module 130 may be pure hardware modules, which include but are not limited to dedicated integrated modules.

It may be understood that the first receiving module 120 is further configured to receive a second request message; the second request message is used to request to establish a PC5 link; the second request message at least includes the information of the client UE; and the PC5 link is at least capable of providing the SL positioning result to the client UE.

The first sending module 110 is configured to send the first request message to the first network device according to the second request message.

It may be understood that the apparatus further includes an establishing module, configured to establish the PC5 link with the client UE, in a case where the first response message indicates that the client UE is allowed to obtain the SL positioning result.

Alternatively, the first sending module 110 is configured to send a second response message to the client UE, in a case where the first response message indicates that the client UE is not allowed to obtain the SL positioning result, and the second response message is used to reject establishment of the PC5 link.

It may be understood that the first receiving module 120 is configured to receive a third request message, the third request message is used to request to obtain an SL positioning service between the first UE and the second UE; and the third request message at least includes the information of the client UE. The first sending module 110 is configured to send the first request message to the first network device according to the third request message.

It may be understood that the apparatus further includes an establishing module, configured to send a third response message including the SL positioning result to the client UE via an established PC5 link, in a case where the first response message indicates that the client UE is allowed to obtain the SL positioning result.

Alternatively, the first sending module 110 is further configured to send a third response message not including the SL positioning result to the client UE via an established PC5 link, in a case where the first response message indicates that the client UE is not allowed to obtain the SL positioning result.

As shown in FIG. 8B, embodiments of the present disclosure provide an information processing apparatus, which includes: a second receiving module 210 and a second sending module 220. The second receiving module 210 is configured to receive a first request message from a first user equipment (UE), the first request message is used to request the first network device to determine whether a client UE is allowed to obtain a sidelink (SL) positioning result; and the first request message at least includes: information of the client UE. The second sending module 220 is configured to send a fourth request message to a second network device according to the first request message; and the fourth request message at least includes: the information of the client UE. The second receiving module 210 is configured to receive a fourth response message from the second network device; the fourth request message is used to request the second network device to determine whether the client UE is allowed to obtain the SL positioning result; and the fourth request message at least includes: the information of the client UE. The second sending module 220 is configured to send a first response message to the first UE according to the fourth response message.

The information processing apparatus may be a first network device. The first network device may be an AMF.

In some embodiments, the second receiving module 210 and the second sending module 220 may be program modules that, when executed by a processor, enable the above operations to be implemented.

In some other embodiments, the second receiving module 210 and the second sending module 220 may be modules with a combination of software and hardware, the module with the combination of software and hardware may include various programmable arrays; and the programmable arrays include but are not limited to field programmable arrays and/or complex programmable arrays.

In some other embodiments, the second receiving module 210 and the second sending module 220 may be pure hardware modules, which include but are not limited to dedicated integrated circuits.

It can be understood that the first network device includes: an access management function (AMF); and/or the second network device includes: a gateway mobile location center (GMLC).

As shown in FIG. 8C, embodiments of the present disclosure provide an information processing device, which includes: third receiving module 310, second determining module 320, and third sending module 330. The third receiving module 310 is configured to receive a fourth request message sent by a first network device; the fourth request message is used to request the second network device to determine whether a client UE is allowed to obtain an SL positioning result; and the fourth request message at least includes: information of the client UE. The second determining module 320 is configured to determine whether the client UE is allowed to obtain the SL positioning result according to the fourth request message. The third sending module 330 is configured to send a fourth response message to the first network device according to whether the client UE is allowed to obtain the SL positioning result.

The information processing apparatus may the second network device. The second network device may include a GMLC.

In some embodiments, the third receiving module 310, the second determining module 320, and the third sending module 330 may be program modules that, when executed by a processor, enable the above operations to be implemented.

In some other embodiments, the third receiving module 310, the second determining module 320 and the third sending module 330 may be modules with a combination of software and hardware, the module with the combination of software and hardware may include various programmable arrays; the programmable arrays include but are not limited to field programmable arrays and/or complex programmable arrays.

In some other embodiments, the third receiving module 310, the second determining module 320 and the third sending module 330 may be pure hardware modules, which include but are not limited to dedicated integrated circuits.

It can be understood that the second determining module 320 is configured to send a fifth request message to a third network device according to the fourth request message, and the fifth request message at least includes: the information of the client UE. The second receiving module is configured to receive a fifth response message sent by the third network device. The second determining module 320 is further configured to determine whether the client UE is allowed to obtain the SL positioning result according to the fifth response message.

It can be understood that the fifth response message includes: an authorization result provided by the third network device; and the authorization result indicates whether the client UE is allowed to obtain the SL positioning result.

It can be understood that the fifth response message includes: subscription data of the client UE. The second determining module 320 is further configured to determine whether the client UE is allowed to obtain the SL positioning result according to the subscription data of the client UE.

It can be understood that the fourth request message further includes: information of a to-be-measured UE; and the to-be-measured UE includes: a first UE and a second UE. The second determining module 320 is further configured to determine whether the client UE is allowed to obtain an SL positioning result of the to-be-measured UE according to the information of the to-be-measured UE and a privacy configuration of the to-be-measured UE, in a case where the client UE is allowed to obtain the SL positioning result. The second sending module is further configured to send the fourth response message to the first network device according to whether the client UE is allowed to obtain the SL positioning result of the to-be-measured UE.

As shown in FIG. 8D, embodiments of the present disclosure provide an information processing apparatus, which includes: a fourth receiving module 410 and a fourth sending module 420.

The fourth receiving module 410 is configured to receive a fifth request message sent by a second network device, the fifth request message is used to request a third network device to determine whether a client UE is allowed to obtain an SL positioning result; and the fifth request message at least includes: information of the client UE. The fourth sending module 420 is configured to send a fifth response message to the second network device according to the fifth request message, and the fifth response message is used for the second network device to determine whether the client UE is allowed to obtain the SL positioning result.

The information processing apparatus may be the third network device. The third network device may include but is not limited to a UDM and/or a UDR.

In some embodiments, the fourth receiving module 410 and the fourth sending module 420 may be program modules that, when executed by a processor, enable the above operations to be implemented.

In some other embodiments, the fourth receiving module 410 and the fourth sending module 420 may be modules with a combination of software and hardware, the module with the combination of software and hardware may include various programmable arrays; the programmable arrays include but are not limited to field programmable arrays and/or complex programmable arrays.

In some other embodiments, the fourth receiving module 410 and the fourth sending module 420 may be pure hardware modules, which include but are not limited to dedicated integrated circuits.

It can be understood that third sending module is configured to: query subscription data of the client UE according to the fifth request message; determine, according to the subscription data of the client UE, whether the client UE is allowed to obtain the SL positioning result to obtain an authorization result; and send the fifth response message including the authorization result to the second network device.

It can be understood that third sending module is configured to: query subscription data of the client UE according to the fifth request message; and send the fifth response message including the subscription data to the second network device.

It can be understood that the third network device includes: a user data management (UDM).

Embodiments of the present disclosure provide a wireless communication system, which includes: a first UE, a first network device, and a second network device. The first UE is configured to send a first request message to the first network device, the first request message is used to request the first network device to determine whether a client UE is allowed to obtain a sidelink (SL) positioning result; and the first request message at least includes: information of the client UE. The first network device is configured to receive the first request message from the first UE, and send a fourth request message to the second network device according to the first request message; the fourth request message is used to request the second network device to determine whether the client UE is allowed to obtain the SL positioning result; and the fourth request message at least includes: the information of the client UE. The second network device is configured to: receive the fourth request message; determine whether the client UE is allowed to obtain the SL positioning result according to the fourth request message; and send a fourth response message to the first network device according to whether the client UE is allowed to obtain the SL positioning result. The first network device is further configured to: receive the fourth response message from the second network device; where the fourth response message at least indicates whether the client UE is allowed to obtain the SL positioning result; and send a first response message to the first UE according to the fourth response message. The first UE is further configured to: receive the first response message returned by the first network device; and determine whether to provide an SL positioning result between the first UE and a second UE to the client UE according to the first response message.

The first request message here may be the aforementioned authorization request message, and/or SL positioning request message, etc.

The first network device may be an AMF; and the second network device may be a GMLC.

In some embodiments, the second network device is further configured to send a fifth request message to a third network device according to the fourth request message, and the fifth request message at least includes: the information of the client UE. The third network device is further configured to: receive the fifth request message sent by the second network device, where the fifth request message is used to request the third network device to determine whether the client UE is allowed to obtain the SL positioning result; and the fifth request message at least includes: the information of the client UE, and send a fifth response message to the second network device according to the fifth request message, where the fifth response message is used for the second network device to determine whether the client UE is allowed to obtain the SL positioning result. The second network device is further configured to determine whether the client UE is allowed to obtain the SL positioning result according to the fifth response message.

The third network device may be a UDM and/or a UDR. The fifth response message here may include the subscription data of the client UE or the authorization result mentioned in the above embodiments.

Embodiments of the present disclosure provide a communication device, which includes: a memory for storing processor-executable instructions; and a processor connected with the memory, and the processor is configured to execute the policy processing method provided by any of the aforementioned technical solutions.

The processor may include various types of storage media, which are non-transitory computer storage media that can retain information stored thereon when the communication device is powered off.

Here, the communication device includes: a first UE or a network device, and the network device may be any one of the aforementioned first network device to third network device.

The processor may be connected to the memory via a bus, etc., and is used to read an executable program stored in the memory, for example, at least one of the methods shown in FIG. 2A to FIG. 2E, FIG. 3, FIG. 4A to FIG. 4C, FIG. 5A to FIG. 5C, FIG. 6A to FIG. 6B, or FIG. 7A to FIG. 7C.

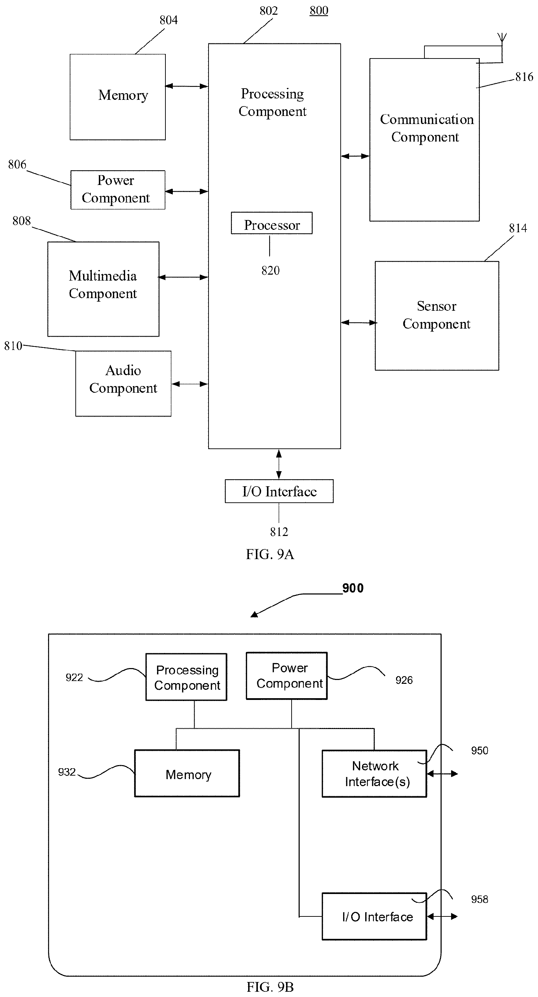

FIG. 9A is a block diagram showing a UE 800 according to an example embodiment. For example, the UE 800 may be a mobile phone, a computer, a digital broadcast UE, a messaging device, a game console, a tablet device, a medical device, a fitness device, a personal digital assistant, or the like.

Referring to FIG. 9A, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, phone calls, data communications, camera operations, and recording operations. The processing component 802 may include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the UE 800 and other devices. The UE 800 can access a wireless network based on a communication standard, such as Wi-Fi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above method.

In an illustrative embodiment, there is also provided a non-transitory computer readable storage medium including instructions, such as included in the memory 804, executable by the processor 820 in the UE 800, for generating the above method. For example, the non-transitory computer-readable storage medium may be a ROM, a random access memory (RAM), a CD-ROM, a magnetic tape, a floppy disc, an optical data storage device, and the like.

As shown in FIG. 9B, an embodiment of the present disclosure shows a structure of a network device. For example, the network device 900 may be provided as a network side device. The communication device may be various network elements such as the aforementioned access network element and/or network function.

Referring to FIG. 9B, the network device 900 includes a processing component 922, which further includes one or more processors, and a memory resource represented by a memory 932 configured to store instructions executable by the processing component 922, such as application programs. The application programs stored in the memory 932 may include one or more modules each corresponding to a set of instructions. In addition, the processing component 922 is configured to execute instructions to perform any method applied to the access device as described above, for example, for example, at least one of the methods shown in FIG. 2A to FIG. 2E, FIG. 3, FIG. 4A to FIG. 4C, FIG. 5A to FIG. 5C, FIG. 6A to FIG. 6B, or FIG. 7A to FIG. 7C.

The network device 900 may also include a power component 926 configured to perform the power management of the network device 900, a wired or wireless network interfaces 950 configured to connect the network device 900 to a network, and an input-output (I/O) interface 958. The network device 900 may operate based on an operating system stored in the memory 932, such as Windows Server TM, Mac OS XTM, UnixTM, LinuxTM, FreeBSDTM, or the like.

In the absence of contradiction, each step in a certain embodiment or example may be implemented as an independent example, and the various steps may be arbitrarily combined. For example, a solution after removing one or more steps of a certain embodiment or example may also be implemented as an independent example, and the order of the steps in a certain embodiment or example may be arbitrarily exchanged. In addition, optional modes or optional examples in a certain embodiment or example may be arbitrarily combined; in addition, the various embodiments or examples may be arbitrarily combined. For example, some or all steps of different embodiment or examples may be arbitrarily combined, and a certain embodiment or example may be arbitrarily combined with the optional methods or optional examples of other embodiments or examples.

Other embodiments of the present disclosure will be apparent to those skilled in the art from consideration of the specification and practice of the present disclosure disclosed here. The present disclosure is intended to cover any variations, uses, or adaptations of embodiments of the present disclosure following the general principles thereof and including such departures from the present disclosure as come within known or customary practice in the art. It is intended that the specification and examples be considered as illustrative, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure be limited by the appended claims.

## Claims

1. An information processing method, performed by a first user equipment (UE), comprising:
sending a first request message to a first network device, wherein the first request message is used to request the first network device to determine whether a client UE is allowed to obtain a sidelink (SL) positioning result; and the first request message at least comprises: information of the client UE;
receiving a first response message returned by the first network device; and
determining whether to provide an SL positioning result between the first UE and a second UE to the client UE according to the first response message.

2. The method according to claim 1, further comprising:
receiving a second request message; wherein the second request message is used to request to establish a PC5 link; the second request message at least comprises the information of the client UE; and the PC5 link is at least capable of providing the SL positioning result to the client UE;
wherein sending the first request message to the first network device comprises:
sending the first request message to the first network device according to the second request message.

3. The method according to claim 2, further comprising:
establishing the PC5 link with the client UE, in a case where the first response message indicates that the client UE is allowed to obtain the SL positioning result; or
sending a second response message to the client UE, in a case where the first response message indicates that the client UE is not allowed to obtain the SL positioning result, wherein the second response message is used to reject establishment of the PC5 link.

4. The method according to claim 1, further comprising:
receiving a third request message, wherein the third request message is used to request to obtain an SL positioning service between the first UE and the second UE; and the third request message at least comprises the information of the client UE;
wherein sending the first request message to the first network device comprises:
sending the first request message to the first network device according to the third request message.

5. The method according to claim 4, further comprising:
sending a third response message comprising the SL positioning result to the client UE via an established PC5 link, in a case where the first response message indicates that the client UE is allowed to obtain the SL positioning result; or
sending a third response message not comprising the SL positioning result to the client UE via an established PC5 link, in a case where the first response message indicates that the client UE is not allowed to obtain the SL positioning result.

6. An information processing method, performed by a first network device, comprising:
receiving a first request message from a first user equipment (UE), wherein the first request message is used to request the first network device to determine whether a client UE is allowed to obtain a sidelink (SL) positioning result; and the first request message at least comprises: information of the client UE;
sending a fourth request message to a second network device according to the first request message; wherein the fourth request message is used to request the second network device to determine whether the client UE is allowed to obtain the SL positioning result; and the fourth request message at least comprises: the information of the client UE;
receiving a fourth response message from the second network device; wherein the fourth response message at least indicates whether the client UE is allowed to obtain the SL positioning result; and
sending a first response message to the first UE according to the fourth response message.

7. The method according to claim 6, wherein the first network device comprises: an access management function (AMF); and/or
the second network device comprises: a gateway mobile location center (GMLC).

8. An information processing method, performed by a second network device, comprising:
receiving a fourth request message sent by a first network device; wherein the fourth request message is used to request the second network device to determine whether a client user equipment (UE) is allowed to obtain a sidelink (SL) positioning result; and the fourth request message at least comprises: information of the client UE;
determining whether the client UE is allowed to obtain the SL positioning result according to the fourth request message; and
sending a fourth response message to the first network device according to whether the client UE is allowed to obtain the SL positioning result.

9. The method according to claim 8, wherein determining whether the client UE is allowed to obtain the SL positioning result according to the fourth request message comprises:
sending a fifth request message to a third network device according to the fourth request message, wherein the fifth request message is used to request the third network device to determine whether the client UE is allowed to obtain the SL positioning result; and the fifth request message at least comprises: the information of the client UE;
receiving a fifth response message sent by the third network device; and
determining whether the client UE is allowed to obtain the SL positioning result according to the fifth response message.

10. The method according to claim 9, wherein the fifth response message comprises: an authorization result provided by the third network device; and the authorization result indicates whether the client UE is allowed to obtain the SL positioning result.

11. The method according to claim 9, wherein the fifth response message comprises: subscription data of the client UE;
wherein determining whether the client UE is allowed to obtain the SL positioning result according to the fifth response message comprises:
determining whether the client UE is allowed to obtain the SL positioning result according to the subscription data of the client UE.

12. The method according to any one of claims 8 to 11, wherein the fourth request message further comprises: information of a to-be-measured UE; and the to-be-measured UE comprises: a first UE and a second UE;
the method further comprises:
determining whether the client UE is allowed to obtain an SL positioning result of the to-be-measured UE according to the information of the to-be-measured UE and a privacy configuration of the to-be-measured UE, in a case where the client UE is allowed to obtain the SL positioning result;
wherein sending the fourth response message to the first network device according to whether the client UE is allowed to obtain the SL positioning result comprises:
sending the fourth response message to the first network device according to whether the client UE is allowed to obtain the SL positioning result of the to-be-measured UE.

13. An information processing method, performed by a third network device, comprising:
receiving a fifth request message sent by a second network device, wherein the fifth request message is used to request the third network device to determine whether a client user equipment (UE) is allowed to obtain a sidelink (SL) positioning result; and the fifth request message at least comprises: information of the client UE; and
sending a fifth response message to the second network device according to the fifth request message, wherein the fifth response message is used for the second network device to determine whether the client UE is allowed to obtain the SL positioning result.

14. The method according to claim 13, wherein sending the fifth response message to the second network device according to the fifth request message comprises:
querying subscription data of the client UE according to the fifth request message;
determining, according to the subscription data of the client UE, whether the client UE is allowed to obtain the SL positioning result to obtain an authorization result; and
sending the fifth response message comprising the authorization result to the second network device.

15. The method according to claim 13, wherein sending the fifth response message to the second network device according to the fifth request message comprises:
querying subscription data of the client UE according to the fifth request message; and
sending the fifth response message comprising the subscription data to the second network device.

16. The method according to any one of claims 13 to 15, wherein the third network device comprises: a user data management (UDM).

17. An information processing method, comprising:
sending, by a first user equipment (UE), a first request message to a first network device, wherein the first request message is used to request the first network device to determine whether a client UE is allowed to obtain a sidelink (SL) positioning result; the first request message at least comprises: information of the client UE;
receiving, by the first network device, the first request message from the first UE, and sending, by the first network device, a fourth request message to a second network device according to the first request message; wherein the fourth request message is used to request the second network device to determine whether the client UE is allowed to obtain the SL positioning result; and the fourth request message at least comprises: the information of the client UE;
receiving, by the second network device, the fourth request message; determining, by the second network device, whether the client UE is allowed to obtain the SL positioning result according to the fourth request message; and sending, by the second network device, a fourth response message to the first network device according to whether the client UE is allowed to obtain the SL positioning result;
receiving, by the first network device, the fourth response message from the second network device; wherein the fourth response message at least indicates whether the client UE is allowed to obtain the SL positioning result; and sending, by first network device, a first response message to the first UE according to the fourth response message; and
receiving, by the first UE, the first response message returned by the first network device; and determining, by first UE, whether to provide an SL positioning result between the first UE and a second UE to the client UE according to the first response message.

18. The method according to claim 17, wherein receiving, by the second network device, the fourth request message; and determining, by the second network device, whether the client UE is allowed to obtain the SL positioning result according to the fourth request message, comprises:
sending, by the second network device, a fifth request message to a third network device according to the fourth request message, wherein the fifth request message at least comprises: the information of the client UE;
receiving, by the third network device, the fifth request message sent by the second network device, wherein the fifth request message is used to request the third network device to determine whether the client UE is allowed to obtain the SL positioning result; the fifth request message at least comprises: the information of the client UE;
sending, by the third network device, a fifth response message to the second network device according to the fifth request message, wherein the fifth response message is used for the second network device to determine whether the client UE is allowed to obtain the SL positioning result; and
determining, by the second network device, whether the client UE is allowed to obtain the SL positioning result according to the fifth response message.

19. An information processing apparatus, comprising:
a first sending module, configured to send a first request message to a first network device, wherein the first request message is used to request the first network device to determine whether a client user equipment (UE) is allowed to obtain a sidelink (SL) positioning result; and the first request message at least comprises: information of the client UE;
a first receiving module, configured to receive a first response message returned by the first network device; and
a first determining module, configured to determine whether to provide an SL positioning result between the first UE and a second UE to the client UE according to the first response message.

20. An information processing apparatus, comprising:
a second receiving module, configured to receive a first request message from a first user equipment (UE), wherein the first request message is used to request a first network device to determine whether a client user equipment (UE) is allowed to obtain a sidelink (SL) positioning result; and the first request message at least comprises: information of the client UE; and
a second sending module, configured to send a fourth request message to a second network device according to the first request message; wherein the fourth request message is used to request the second network device to determine whether the client UE is allowed to obtain the SL positioning result; and the fourth request message at least comprises: the information of the client UE;
wherein the second receiving module is configured to receive a fourth response message from the second network device; wherein the fourth response message at least indicates whether the client UE is allowed to obtain the SL positioning result; and
the second sending module is configured to send a first response message to the first UE according to the fourth response message.

21. An information processing apparatus, comprising:
a third receiving module, configured to receive a fourth request message sent by a first network device; wherein the fourth request message is used to request a second network device to determine whether a client user equipment (UE) is allowed to obtain a sidelink (SL) positioning result; and the fourth request message at least comprises: information of the client UE;
a second determining module, configured to determine whether the client UE is allowed to obtain the SL positioning result according to the fourth request message; and
a third sending module, configured to send a fourth response message to the first network device according to whether the client UE is allowed to obtain the SL positioning result.

22. An information processing apparatus, comprising:
a fourth receiving module, configured to receive a fifth request message sent by a second network device, wherein the fifth request message is used to request a third network device to determine whether a client user equipment (UE) is allowed to obtain a sidelink (SL) positioning result; and the fifth request message at least comprises: information of the client UE; and
a fourth sending module, configured to send a fifth response message to the second network device according to the fifth request message, wherein the fifth response message is used for the second network device to determine whether the client UE is allowed to obtain the SL positioning result.

23. A wireless communication system, comprising: a first user equipment (UE), a first network device, and a second network device, wherein
the first UE is configured to send a first request message to the first network device, wherein the first request message is used to request the first network device to determine whether a client UE is allowed to obtain a sidelink (SL) positioning result; and the first request message at least comprises: information of the client UE;
the first network device is configured to receive the first request message from the first UE, and send a fourth request message to the second network device according to the first request message; wherein the fourth request message is used to request the second network device to determine whether the client UE is allowed to obtain the SL positioning result; and the fourth request message at least comprises: the information of the client UE;
the second network device is configured to: receive the fourth request message; determine whether the client UE is allowed to obtain the SL positioning result according to the fourth request message; and send a fourth response message to the first network device according to whether the client UE is allowed to obtain the SL positioning result;
the first network device is further configured to: receive the fourth response message from the second network device; wherein the fourth response message at least indicates whether the client UE is allowed to obtain the SL positioning result; and send a first response message to the first UE according to the fourth response message; and
the first UE is further configured to: receive the first response message returned by the first network device; and determine whether to provide an SL positioning result between the first UE and a second UE to the client UE according to the first response message.

24. The system according to claim 23, wherein the second network device is further configured to: send a fifth request message to a third network device according to the fourth request message, wherein the fifth request message is used to request the third network device to determine whether the client UE is allowed to obtain the SL positioning result; and the fifth request message at least comprises: the information of the client UE;
the third network device is further configured to: receive the fifth request message sent by the second network device; and send a fifth response message to the second network device according to the fifth request message, wherein the fifth response message is used for the second network device to determine whether the client UE is allowed to obtain the SL positioning result; and
the second network device is further configured to: determine whether the client UE is allowed to obtain the SL positioning result according to the fifth response message.

25. A communication device, comprising a processor, a transceiver, a memory, and executable programs stored in the memory and runnable by the processor, wherein the processor is configured to perform the information processing method according to any one of claims 1 to 5, 6 to 7, 8 to 12, and 17 to 18 when running the executable programs.

26. A computer storage medium having stored therein executable programs that, when executed by a processor, cause the information processing method according to any one of claims 1 to 5, 6 to 7, 8 to 12, and 17 to 18 to be implemented.
